# EUROPEAN PATENT SPECIFICATION

(11) **EP 3 174 329 B1**
(45) Date of publication and mention of the grant of the patent: **25.11.2020**
(21) Application number: 14882003.8
(22) Date of filing: 23.10.2014
(51) Int. Cl.: H04W 24/00, H04W 24/02

(54) **RE-ALLOCATION REQUEST METHOD, AND RE-ALLOCATION METHOD AND DEVICE**
VERFAHREN FÜR NEUZUTEILUNGSANFRAGE SOWIE VERFAHREN UND VORRICHTUNG FÜR NEUZUTEILUNG
PROCÉDÉ DE DEMANDE DE RÉAFFECTATION, ET PROCÉDÉ ET DISPOSITIF DE RÉAFFECTATION

(30) Priority: 25.07.2014 CN 201410361196
(43) Date of publication of application: 31.05.2017
(73) Proprietor: ZTE Corporation, Shenzhen, Guangdong 518057 (CN)
(72) Inventor: LIU, Xing, Shenzhen Guangdong 518057 (CN); LI, Yan, Shenzhen Guangdong 518057 (CN); MIAO, Ting, Shenzhen Guangdong 518057 (CN); REN, Longtao, Shenzhen Guangdong 518057 (CN)
(74) Representative: Deambrogi, Edgardo
(86) International application number: PCT/CN2014/089359
(87) International publication number: WO 2015/117406

(56) References cited:
- EP-A1- 2 750 467
- WO-A1-2014/019739
- CN-A- 102 572 989
- CN-A- 102 905 333
- CN-A- 103 167 423
- CN-A- 103 428 748

## Description

### Technical Field

The present disclosure relates to the field of communications, and in particular to a reconfiguration request method and apparatus, and a reconfiguration method and apparatus.

### Background

With the continuous development of radio technologies, various radio services emerge dramatically. Spectrum resources on which the radio services rely are limited, and the spectrum resources are in an extreme shortage situation with the continuous increase of demands of people on bandwidth. In addition, under a traditional fixed spectrum allocation mode, the utilization rate of the spectrum resources is not high. In a sense, the extreme shortage situation of the spectrum resources is caused by the fixed spectrum allocation mode in which the spectrum resources are fixedly allocated to licensed systems. A cognitive radio technology changes the traditional fixed spectrum allocation mode, and performs dynamic spectrum allocation among systems, which improves the utilization efficiency of spectra. Typically, with the continuous increase of daily communication demands of people, users are no longer satisfied with simple voice data communication, the proportion of video stream media services in people's communication life is continuously increasing, which requires the support of a larger bandwidth. The International Mobile Telecom (IMT) system has shown an unprecedented spectrum shortage situation.

The industry proposes three potentially feasible solutions: 1. dynamic planning of IMT and GSM spectra; 2. opportunistically using an idle spectrum of a master system; and 3. Licensed Shared Access (LSA).

At present, based on the above-mentioned three technologies, each communication station initiates a reconfiguration request to a configuration management node by using a respective standard, and the configuration management node makes a decision according to information of a current situation of configurable resources and information about usage of configurable spectrum resources at other communication stations, and determines configuration parameters for the communication station initiating the reconfiguration request.

In this process, since initiating conditions and contents for different parameter configuration requests are not standardized, the communication stations initiate the reconfiguration requests by using their respective standards, and the configuration management node cannot distinguish different request reasons and the degree of a resource demand of each communication station. This will cause the following problems.
(1) High signalling cost: a great number of resource requests are reported by the communication stations, and some of the requests may not reach a resource configuration standard, so unnecessary signalling costs in reporting the requests are generated.
(2) Resource configuration rationality cannot be ensured: it cannot be ensured that limited configurable spectrum resources are allocated to a communication station which has the most urgent need for the spectrum resources and it cannot be ensured that the overall performance of a reconfiguration network is optimal.
(3) Since the configuration management node cannot accurately know a reconfiguration reason or target of each station, the reconfiguration decision may not be well targeted, so that the reconfiguration may be ineffective. The number of times for reconfiguration interaction is increased due to the ineffective reconfiguration. Therefore, interactive signalling costs and processing delays will be greatly increased.

An effective solution is not proposed yet at present for the problems caused by non-standard reconfiguration requests in the related art.

EP 2 750 467 A1 discloses a spectrum resource reconfiguration method, and the method includes: after spectrum resource configuration is triggered, a spectrum resource configuration decision is generated, and spectrum resources are configured to a to-be-configured link according to the configuration decision.

### Summary

Embodiments of the present disclosure provide a reconfiguration request method and apparatus, and a reconfiguration method and apparatus, which are intended to at least solve the problems caused by non-standard reconfiguration requests in the related art.

According to an embodiment of the present disclosure, a reconfiguration request method is provided according to claim 1.

According to another embodiment of the present disclosure, a reconfiguration method is provided according to claim 8.

According to a further embodiment of the present disclosure, a reconfiguration request apparatus is provided according to claim 14.

According to yet a further embodiment of the present disclosure, a reconfiguration apparatus is provided according to claim 15.

By means of the embodiments of the present disclosure, the communication station receives the configuration message, wherein the configuration message is configured to indicate the trigger condition for initiating the reconfiguration request; the communication station monitors at least one network performance parameter according to the configuration message; and when the at least one network performance parameter satisfies the trigger condition, the communication station initiates the reconfiguration request. The problems caused by non-standard reconfiguration requests in the related art are solved, so that the reconfiguration requests are more standardized, thereby avoiding useless reconfiguration requests, enhancing the resources configuration rationality, reducing the extra signalling costs caused by inappropriate resources configuration, and lowering processing delays.

### Brief Description of the Drawings

The accompanying drawings described herein are intended to provide further understanding of the present disclosure, and form a part of the present application. The schematic embodiments and descriptions of the present disclosure are intended to explain the present disclosure, and do not form improper limits to the present disclosure. In the accompanying drawings:
Fig. 1 is a flowchart of a reconfiguration request method according to an embodiment of the present disclosure;
Fig. 2 is a structure block diagram of a reconfiguration request apparatus according to an embodiment of the present disclosure;
Fig. 3 is a flowchart of a reconfiguration method according to an embodiment of the present disclosure;
Fig. 4 is a structure block diagram of a reconfiguration apparatus according to an embodiment of the present disclosure;
Fig. 5 is a structure block diagram of a reconfiguration system according to an embodiment of the present disclosure;
Fig. 6 is a general schematic diagram of a reconfiguration trigger method according to an example embodiment of the present disclosure;
Fig. 7 is a schematic diagram of a system architecture in which a communication station runs under a mode of opportunistically using an idle spectrum of a master system according to an example embodiment of the present disclosure;
Fig. 8 is a diagram showing the flow of trigger event configuration and decision according to Embodiments 1 to 3 of the present disclosure;
Fig. 9 is a diagram showing the flow of trigger event configuration and decision according to Embodiment 4 of the present disclosure;
Fig. 10 is a schematic diagram of the architecture of an LSA network according to an example embodiment of the present disclosure;
Fig. 11 is a schematic diagram of a system architecture in which a communication station runs under a multi-system shared spectrum mode according to Embodiment 5 of the present disclosure;
Fig. 12 is a diagram showing the flow of trigger event configuration and decision according to Embodiment 5 of the present disclosure;
Fig. 13 is a diagram showing the flow of pre-configured threshold adjustment according to Embodiment 6 of the present disclosure; and
Fig. 14 is a diagram showing the flow of configuration update of reconfiguration trigger event according to Embodiment 7 of the present disclosure.

### Detailed Description of the Embodiments

The present disclosure will be described below with reference to the accompanying drawings and in conjunction with the embodiments in detail. It is important to note that the embodiments in the present application and the features in the embodiments may be combined under the condition of no conflicts.

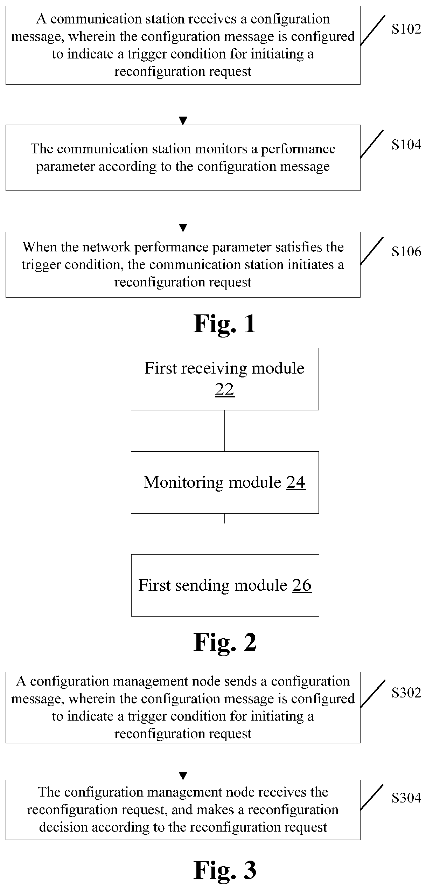

In the present embodiment, a reconfiguration request method is provided. Fig. 1 is a flowchart of a reconfiguration request method according to an embodiment of the present disclosure. As shown in Fig. 1, the method includes the following steps.

Step S102: A communication station receives a configuration message, wherein the configuration message is configured to indicate a trigger condition for initiating a reconfiguration request.

Step S104: The communication station monitors at least one network performance parameter according to the configuration message.

Step S106: When the at least one network performance parameter satisfies the trigger condition, the communication station initiates a reconfiguration request.

In the present embodiment, by means of the above-mentioned steps, the communication station monitors at least one network performance parameter according to the received configuration message, and initiates the reconfiguration request when the at least one network performance parameter satisfies the trigger condition indicated by the configuration message, that is, a condition for initiating the reconfiguration request can be set. The problems caused by non-standard reconfiguration requests in the related art are solved, so that the reconfiguration requests are more standardized, thereby avoiding useless reconfiguration requests, enhancing the resources configuration rationality, reducing the extra signalling costs caused by inappropriate resources configuration, and lowering processing delays.

The above-mentioned message may be sent to the communication station by a configuration management node pertinent to the communication station, wherein the step that the communication station receives the configuration message may include that: the communication station receives, via a measurement configuration message, the configuration message sent by the configuration management node; or the communication station receives, via a dedicated message, the configuration message sent by the configuration management node.

The configuration message may include at least one of the following information: at least one reconfiguration trigger event, at least one network performance parameter to be monitored and corresponding to the at least one reconfiguration trigger event, a pre-configured threshold of the at least one network performance parameter, a monitoring period, and a priority of the at least one reconfiguration trigger event.

The at least one reconfiguration trigger event may include at least one of followings: a coverage hole; a weak coverage area; cross-boundary coverage; pilot pollution; a radio resource utilization rate or a hardware resource utilization rate being higher than a pre-configured threshold, wherein a radio resource may include at least one of followings: a PRB or a PDCCH, and a hardware resource may include at least one of followings: a Central Processing Unit (CPU), or a Micro Processing Unit (MPU), or a Digital Signal Processor (DSP), or a Field-Programmable Gate Array (FPGA); a network congestion rate being higher than a pre-configured threshold, wherein network congestion may include at least one of followings: call congestion, or bearer establishment congestion; a network load being higher than a pre-configured threshold, wherein a network load may include at least one of followings: a speech traffic, or a service volume, or the number of users, or a throughput, or a number of RRC connections; the number of potential RRC connections or a potential throughput demand being higher than a pre-configured threshold; an interference value being higher than a pre-configured threshold; a transmission rate being lower than a pre-configured threshold; a throughput being lower than a pre-configured threshold; a network delay being higher than a pre-configured threshold, wherein a delay may include at least one of followings: a delay of conversion of a terminal from an Idle state to an Active state, or an Attach delay, or a user-plane delay, or a service interruption delay under inter-system handover; one of an RRC connection establishment success rate, an E-RAB establishment success rate, an RRC connection reestablishment success rate or a radio establishment success rate being lower than a pre-configured threshold; an abnormal call drop rate being higher than a pre-configured threshold, wherein the call drop rate may include at least one of followings: an E-RAB abnormal call drop rate, or an RRC abnormal call drop rate; a handover success rate being lower than a pre-configured threshold; and irrational resource allocation, wherein the irrational resource allocation refers to that current resource configuration does not meet an actual network demand, and specifically may include: mismatching between a resource allocation proportion under each RAT and a load proportion under each RAT, or mismatching between the resource allocation proportion under each RAT and a load proportion under each service type in a practical network.

The at least one network performance parameter to be monitored is at least one parameter capable of reflecting a network operating state, and may include at least one of the following parameters: an RSRP, an RSRQ, an RSSI, a coverage rate, an RS-CINR, a PDCCH SINR, a TA, a PRB utilization rate, a PDCCH utilization rate, a hardware processor occupation rate, a call congestion rate, an E-RAB establishment blocking rate, the number of potential RRC connections, a potential throughput demand, a speech traffic, a service volume, the number of users, an interference value, an RRC connection establishment success rate, an E-RAB establishment success rate, an RRC connection reestablishment success rate, a radio establishment success rate, an E-RAB abnormal call drop rate, an RRC abnormal call drop rate, an intra-system handover success rate, an inter-system handover success rate, a transmission rate, a throughput, a delay of conversion of a UE from an Idle state to an Active state, an Attach delay, a user-plane delay, a service interruption delay under inter-system handover, a service volume of each service type, and a service volume of each RAT.

Before the communication station monitors at least one network performance parameter according to the configuration message, the communication station sends an adjustment request message to a configuration management node pertinent to the communication station, wherein the adjustment request message is used for notifying, by the communication station, the configuration management node of a pre-configured threshold determined according to a network state of the communication node. The adjustment request message may include at least one of the following information: an adjustment reason, an adjustment suggestion, and an adjustment target, wherein the adjustment suggestion may include: increasing or decreasing of an original pre-configured threshold; and the adjustment target may include: a pre-configured threshold expected by the communication station, or an expected increment or decrement amplitude relative to the original pre-configured threshold.

The step that the communication station initiates the reconfiguration request when the at least one network performance parameter satisfies the trigger condition may include that: the communication station acquires actual value of the at least one network performance parameter corresponding to the trigger condition by means of measurement or statistics; the communication station compares the actual value of at least one the network performance parameter with a pre-configured threshold of the at least one network performance parameter in the trigger condition; and when the trigger condition is satisfied, the communication station initiates the reconfiguration request.

The reconfiguration request is used for indicating, by the communication station, a configuration management node pertinent to the communication station of a current network state of the communication station, and/or a current network problem, and/or a reconfiguration target. The reconfiguration request is also used for requesting to re-configure at least one current network configuration parameter.

The reconfiguration request may include at least one of followings: a trigger reason, wherein the trigger reason is the trigger condition satisfied by the communication station; actual value of the network performance parameter; and a reconfiguration target.

The at least one network configuration parameter may include at least one of followings: a transmitting power, a frequency point, a bandwidth, a coverage range, an antenna height, an antenna direction angle, an antenna pitch angle, an antenna polarization mode, an out-of-band transmitting characteristic, a duplex mode of the communication station, an RAT, a working time period, a hardware resource, a physical cell identifier, a neighbour relation table, and a mobility parameter.

The reconfiguration target is a requirement of or limit to a configuration resource by the communication station, and may include at least one of the following parameters: a frequency point requirement, a bandwidth requirement, a transmitting power requirement, a channel quality demand, a maximum interference allowance limit, an adjacent frequency transmitting power limit, a frequency domain isolation requirement, and a coverage demand.

In correspondence to the above-mentioned reconfiguration request method, in another embodiment, a reconfiguration request apparatus is also provided, which is located at a communication station. The apparatus is configured to implement the above-mentioned embodiment and example implementation modes thereof. Those which have been illustrated will not be elaborated herein. Just as a term 'module' used below, the combination of software and/or hardware with predetermined functions may be implemented. Although the apparatus described by the following embodiment is better implemented by software, the implementation of hardware or the combination of software and hardware may be possible and conceived.

Fig. 2 is a structure block diagram of a reconfiguration request apparatus according to an embodiment of the present disclosure. As shown in Fig. 2, the apparatus includes a first receiving module 22, a monitoring module 24 and a first sending module 26. Each module will be elaborated below.

The first receiving module 22 is arranged to receive a configuration message, wherein the configuration message is configured to indicate a trigger condition for initiating a reconfiguration request; the monitoring module 24 is coupled to the first receiving module 22 and arranged to monitor at least one network performance parameter according to the configuration message received by the first receiving module 22; and the first sending module 26 is coupled to the monitoring module 24 and arranged to initiate, when the monitoring module 24 monitors that the at least one network performance parameter satisfies the trigger condition, a reconfiguration request.

In another embodiment, a reconfiguration method is also provided. Fig. 3 is a flowchart of a reconfiguration method according to an embodiment of the present disclosure. As shown in Fig. 3, the method includes the following steps.

Step S302: A configuration management node sends a configuration message, wherein the configuration message is configured to indicate a trigger condition for initiating a reconfiguration request.

Step S304: The configuration management node receives the reconfiguration request, and makes a reconfiguration decision according to the reconfiguration request.

In the present embodiment, by means of the above-mentioned steps, the configuration management node sends the configuration message, so a communication station may initiate the reconfiguration request according to the trigger condition indicated by the configuration message, that is, a condition for initiating the reconfiguration request can be set. Moreover, the configuration management node also makes the reconfiguration decision according to the reconfiguration request, so resources can be more rationally configured. The problems caused by non-standard reconfiguration requests in the related art are solved, so that the reconfiguration requests are more standardized, thereby reducing the signalling costs, enhancing the resources configuration rationality, and lowering processing delays.

The step that the configuration management node sends the configuration message to the communication station may include that: the configuration management node sends the configuration message to the communication station via a measurement configuration message; or, the configuration management node sends the configuration message to the communication station via a dedicated message.

The configuration message may contain at least one of the following information: at least one reconfiguration trigger event, at least one network performance parameter to be monitored and corresponding to the at least one reconfiguration trigger event, a pre-configured threshold of the at least one network performance parameter, a monitoring period, and a priority of the at least one reconfiguration trigger event.

After the configuration management node sends the configuration message, the configuration management node may also update the configuration message, and generate a configuration update message; and the configuration management node sends the configuration update message to a communication station managed by the configuration management node.

The configuration update message may include at least one of the following information: at least one updated reconfiguration trigger event, at least one network performance parameter to be monitored and corresponding to the at least one updated reconfiguration trigger event, an updated pre-configured threshold of the at least one network performance parameter, a monitoring period, and a priority of the at least one updated reconfiguration trigger event.

The updated pre-configured threshold may include one of: a pre-configured threshold obtained by changing an original pre-configured threshold by the configuration management node according to a situation of currently configurable resources or a change in management policy; or, a pre-configured threshold determined for the communication station according to a pre-configured threshold adjustment request message sent by the communication station and received by the configuration management node.

The step that the configuration management node makes the reconfiguration decision according to the reconfiguration request may include that: the configuration management node makes a reconfiguration plan for at least one network configuration parameter according to the reconfiguration request reported by the communication station managed by the configuration management node.

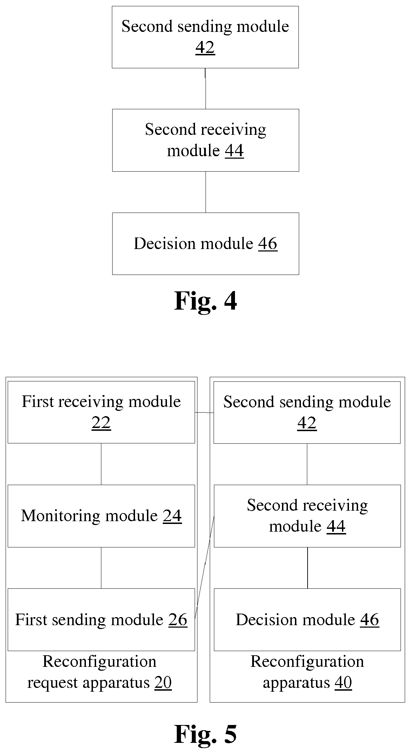

In correspondence to the above-mentioned reconfiguration method, in still another embodiment, a reconfiguration apparatus is also provided, which is located at a configuration management node. Fig. 4 is a structure block diagram of a reconfiguration apparatus according to an embodiment of the present disclosure. As shown in Fig. 4, the apparatus includes a second sending module 42, a second receiving module 44 and a decision module 46. Each module will be elaborated below.

The second sending module 42 is arranged to send a configuration message, wherein the configuration message is configured to indicate a trigger condition for initiating a reconfiguration request; the second receiving module 44 is arranged to receive the reconfiguration request; and the decision module 46 is coupled to the receiving module 44 and arranged to make a reconfiguration decision according to the reconfiguration request received by the receiving module 44.

In the present embodiment, a reconfiguration system is also provided. Fig. 5 is a structure block diagram of a reconfiguration system according to an embodiment of the present disclosure. As shown in Fig. 5, the system includes a reconfiguration request apparatus 20 as shown in Fig. 2 and a reconfiguration apparatus 40 as shown in Fig. 4.

Illustrations are made below in conjunction with example embodiments. The following example embodiments may be a combination of the above-mentioned embodiments and example implementation modes thereof.

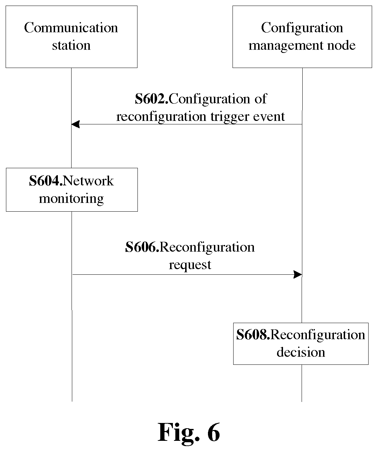

In the following example embodiments, a reconfiguration trigger method and system based on a cognitive radio system are provided. Fig. 6 is a general schematic diagram of a reconfiguration trigger method according to an example embodiment of the present disclosure. As shown in Fig. 6, the reconfiguration trigger method is described below in detail.

Step S602: A communication station receives a reconfiguration trigger event configuration message.

Step S604-S606: The communication station executes network performance parameter monitoring specified by the configuration message, and initiates a reconfiguration request when an actual performance parameter value satisfies a reconfiguration trigger event.

The reconfiguration trigger event configuration message is sent by a configuration management node pertinent to the communication station, and is used to configure, on the communication station, a condition needing to be satisfied by a network performance parameter when the communication station triggers reconfiguration. The message may be sent by reusing an existing measurement configuration message sent to the communication station by the configuration management node, or may be sent by using a dedicated message.

The reconfiguration trigger event configuration message may include one or more of the following information: a reconfiguration trigger event, a network performance parameter to be monitored and corresponding to the reconfiguration trigger event, a pre-configured threshold of each network performance parameter, a monitoring period, and a priority of the reconfiguration trigger event.

In the exemplary embodiment, the reconfiguration trigger event may include one or more of the following events:
(1) a coverage hole;
(2) a weak coverage area;
(3) cross-boundary coverage;
(4) pilot pollution;
(5) a radio resource utilization rate or a hardware resource utilization rate being higher than a pre-configured threshold, wherein a radio resource may include at least one of followings: a PRB or a PDCCH; and a hardware resource may include at least one of followings: a CPU, or an MPU, or a DSP, or an FPGA;
(6) a network congestion rate being higher than a pre-configured threshold, wherein network congestion may include at least one of followings: call congestion, or bearer establishment congestion;
(7) a network load being higher than a pre-configured threshold, wherein a network load may include at least one of followings: a speech traffic, or a service volume, or the number of users, or a throughput, or a number of RRC connections;
(8) the number of potential RRC connections or a potential throughput demand being higher than a pre-configured threshold;
(9) an interference value being higher than a pre-configured threshold;
(10) a transmission rate being lower than a pre-configured threshold;
(11) a throughput being lower than a pre-configured threshold;
(12) a network delay being higher than a pre-configured threshold, wherein a delay may include at least one of followings: a delay of conversion of a terminal from an Idle state to an Active state, or an Attach delay, or a user-plane delay, or a service interruption delay under inter-system handover;
(13) an RRC connection establishment success rate, or an E-RAB establishment success rate, or an RRC connection reestablishment success rate or a radio establishment success rate being lower than a pre-configured threshold;
(14) an abnormal call drop rate being higher than a pre-configured threshold, wherein the call drop rate may include at least one of followings: an E-RAB abnormal call drop rate, or an RRC abnormal call drop rate;
(15) a handover success rate being lower than a pre-configured threshold; and
(16) irrational resource allocation, wherein the irrational resource allocation refers to that current resource configuration does not meet an actual network demand, and specifically may include: mismatching between a resource allocation proportion under each RAT and a load proportion under each RAT, or mismatching between the resource allocation proportion under each RAT and a load proportion under each service type in a practical network.

The network performance parameter to be monitored refers to a parameter capable of reflecting a network operating state, and may include one or more of the following parameters:
an RSRP, an RSRQ, an RSSI, a coverage rate, an RS-CINR, a PDCCH SINR, a TA, a PRB utilization rate, a PDCCH utilization rate, a hardware processor occupation rate, a call congestion rate, an E-RAB establishment blocking rate, the number of potential RRC connections, a potential throughput demand, a speech traffic, a service volume, the number of users, an interference value, an RRC connection establishment success rate, an E-RAB establishment success rate, an RRC connection reestablishment success rate, a radio establishment success rate, an E-RAB abnormal call drop rate, an RRC abnormal call drop rate, an intra-system handover success rate, an inter-system handover success rate, a transmission rate, a throughput, a delay of conversion of a UE from an Idle state to an Active state, an Attach delay, a user-plane delay, a service interruption delay under inter-system handover, a service volume of each service type, and a service volume of each RAT.

The pre-configured threshold of each network performance parameter is set by the configuration management node. The communication station may send an adjustment request to the configuration management node according to a network state of the communication node, wherein the adjustment request for the pre-configured threshold may include one or more of the following information: an adjustment reason, an adjustment suggestion, and an adjustment target, wherein the adjustment suggestion may include: increasing or decreasing of an original pre-configured threshold; and the adjustment target refers to: a pre-configured threshold expected by the communication station, or an expected increment or decrement amplitude relative to the original pre-configured threshold.

The step that the communication station executes network performance parameter monitoring specified by the configuration message and initiates a reconfiguration request when an actual performance parameter value satisfies a reconfiguration trigger event is described as follows: the communication station acquires actual value of the network performance parameter to be monitored specified in the configuration message by means of measurement or statistics, and compares the actual value of the network performance parameter with a pre-configured threshold; and when the reconfiguration trigger event is satisfied, the communication station sends a reconfiguration request message to the configuration management node.

In the exemplary embodiment, the reconfiguration request message is configured to indicate, by the communication station, the configuration management node of a current network state, and/or a current network problem, and/or a reconfiguration target, and to request to re-configure a current network configuration parameter. The reconfiguration request message may include one or more of the following information: a trigger reason, namely the reconfiguration trigger event satisfied by a network; an actual monitoring result of the network performance parameter; and a reconfiguration target.

In the exemplary embodiment, the network configuration parameter may include one or more of the following parameters: a transmitting power, a frequency point, a bandwidth, a coverage range, an antenna height, an antenna direction angle, an antenna pitch angle, an antenna polarization mode, an out-of-band transmitting characteristic, a duplex mode of the communication station, an RAT, a working time period, a hardware resource, a physical cell identifier, a neighbour relation table, and a mobility parameter.

The reconfiguration target refers to a requirement of or limit to a configuration resource by the communication station, and may include one or more of the following parameters: a frequency point requirement, a bandwidth requirement, a transmitting power requirement, a channel quality demand, a maximum interference allowance limit, an adjacent frequency transmitting power limit, a frequency domain isolation requirement, and a coverage demand.

As shown in Fig. 6, based on description from one side of the configuration management node, the above-mentioned trigger method includes the following steps.

Step S602: The configuration management node sends a reconfiguration trigger event configuration message.

Step S608: The configuration management node receives a reconfiguration request, and makes a reconfiguration decision.

The reconfiguration trigger event configuration message contains one or more of the following information: a reconfiguration trigger event, a network performance parameter to be monitored and corresponding to the reconfiguration trigger event, a pre-configured threshold of each network performance parameter, and a monitoring period.

The method may further include that: the configuration management node may update the reconfiguration trigger event configuration, generate a reconfiguration trigger event configuration update message, and send the reconfiguration trigger event configuration update message to the communication station.

In the exemplary embodiment, the reconfiguration trigger event configuration update message may include one or more of the following information: a new reconfiguration trigger event, a new network performance parameter to be monitored, a new pre-configured threshold of the new network performance parameter, a new monitoring period, and a new priority of the reconfiguration trigger event.

In the exemplary embodiment, the new pre-configured threshold may be: a pre-configured threshold obtained by changing an original pre-configured threshold by the configuration management node according to a situation of currently configurable resources or a change in management policy; or a new pre-configured threshold determined for the communication station according to a pre-configured threshold adjustment request message sent by the communication station and received by the configuration management node.

The reconfiguration decision refers to: making, by the configuration management node, a reconfiguration plan for a network configuration parameter according to the reconfiguration request reported by the communication station.

In the present example embodiment, the configuration management node configures a reconfiguration trigger event for the communication station, and standardizes a trigger condition for resource reconfiguration of the communication station, and each communication station monitors a parameter specified for the reconfiguration trigger event and initiates a reconfiguration request when the reconfiguration trigger event is satisfied. The above-mentioned solution achieves the following beneficial effects. The resource configuration rationality is ensured, and it is ensured that limited configurable spectrum resources are allocated to a communication station needing spectra most. Signalling costs caused by unnecessary reconfiguration request report are reduced. The configuration management node can make a configuration decision better meeting the demands of each station, thereby improving the spectrum efficiency, and reducing signalling interaction costs and processing delays increased due to the invalid configuration decision.

The example embodiment will be elaborated below in conjunction with the accompanying drawings and specific embodiments.

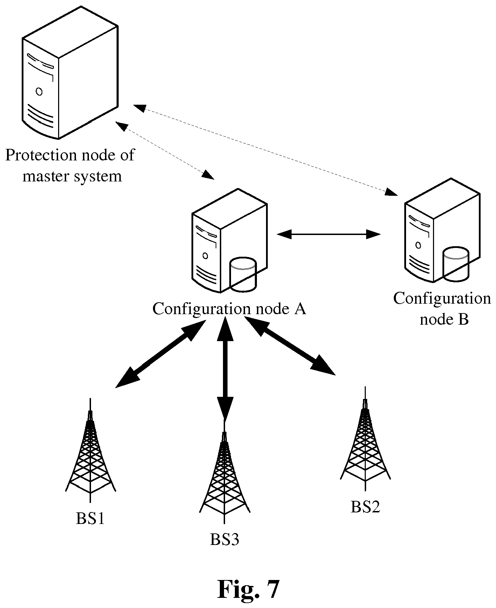

Fig. 7 is a schematic diagram of a system architecture in which a communication station runs under a mode of opportunistically using an idle spectrum of a master system according to an example embodiment of the present disclosure. Based on the architecture shown in Fig. 7, the working mode will be specifically described in detail in the following example embodiments, namely Embodiments 1 to 4. Function entities in the architecture as shown in Fig. 7 are specifically introduced as follows.

A configuration management node refers to a function entity responsible for spectrum resource configuration management of a secondary system, and may be any one of the following function entities: a Spectrum Coordinator (SC), a Central Control Point (CCP), a reconfiguration management module, a reconfiguration function module, a reconfiguration entity, an advanced positioning entity, an advanced positioning function, and a co-existence function.

Typical idle spectrum resources of a master system are, for example, TVWS spectra, namely unused spectrum resources of the master system within a range of 470MHz-790MHz. In the following example embodiments, description is made by taking the TVWS spectra as examples. In the following exemplary embodiments, a main user protection management node is a Geo-Location Database (GLDB), and an interference co-existence configuration management node between secondary systems is an SC. The architecture of a TVWS band CR technology is introduced as follows.

The GLDB is responsible for protecting the master system, and providing a master system spectrum using condition for communication stations or secondary system management nodes, thereby avoiding the master system from being interfered by the secondary systems. Specifically, idle spectrum resources at a location of the communication station are provided for the communication station, and a maximum transmitting power allowed for the communication station is calculated according to a main user protection criterion.

The SC is a spectrum resource reconfiguration management node of a secondary system, and is responsible for co-existence management, priority management and measurement management between secondary user devices.

A BS is a communication station, and may be representative of an Access Point (AP) of a base station under a cellular network system such as LTE, a 3G system and a 2G system, or an AP under an IEEE802 system such as WLAN, WRAN and Wimax.

### Embodiment 1

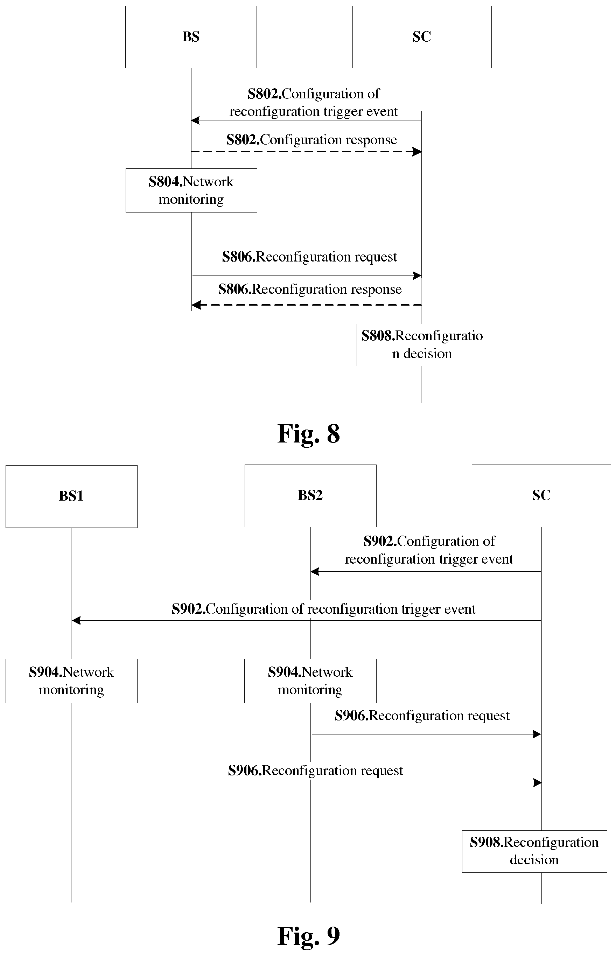

Fig. 8 is a diagram showing the flow of trigger event configuration and decision according to Embodiments 1 to 3 of the present disclosure. A BS runs at an idle spectrum f1, and under a scenario where a reconfiguration request for idle spectrum can be triggered by secondary user device due to a coverage reason, as shown in Fig. 8, the trigger event configuration and decision flow is specifically described below.

Step S802: An SC sends a reconfiguration trigger event configuration message to a BS of a secondary user device.

In the exemplary embodiment, the reconfiguration trigger event configuration message may include the following information: a reconfiguration trigger event, a network performance parameter to be monitored and corresponding to the reconfiguration trigger event, a pre-configured threshold of each network performance parameter, and a monitoring period.

The BS optionally replies with a configuration response message, and confirms, to the SC, that the reconfiguration trigger event configuration message, for example, as shown in Table 1, has been correctly received.

**Table 1**

| Reconfiguration trigger event | Network performance parameter to be monitored | Pre-configured threshold | Monitoring period |
|---|---|---|---|
| Coverage hole | RSRP | -119dBm | 10s |
| | User proportion lower than a pre-configured threshold within a certain area | 30% | |
| Weak coverage area | RSRP | -105dBm>X>-119dBm | |
| | User proportion lower than a pre-configured threshold within a certain area | 30% | |
| Cross-boundary coverage | TA | 7 | |
| | User proportion exceeding a TA threshold | 30% | |
| | Downlink average receiving power of the users exceeding a TA threshold | -75dBm | |
| Pilot pollution | RSRP | -90dBm | |
| | Number of strong pilots | 4 | |
| | Field intensity difference | 6dB | |

In the exemplary embodiment, the relevant parameters and pre-configured thresholds under the coverage hole event are defined as follows: within a certain pre-defined area range, when it is obtained, by measurement, that the proportion of quantity of users, having an RSRP value smaller than a pre-defined threshold (e.g., -119dBm), to a total user quantity within the area is greater than a pre-defined proportion (e.g., 30%), it is considered that a coverage hole appears in a network at a corresponding position.

The relevant parameters and pre-configured thresholds under the weak coverage area event are defined as follows: within a certain pre-defined area range, when it is obtained, by measurement, that the proportion of quantity of users, having an RSRP value smaller than a pre-defined threshold (e.g., -105dBm), to the total user quantity within the area is greater than the pre-defined proportion (e.g., 30%), it is considered that a weak coverage area appears in the network at a corresponding position.

The relevant parameters and pre-configured thresholds under the cross-boundary coverage event are defined as follows: TA values of users and a user proportion exceeding a TA threshold within a cell are measured statistically, and a user downlink average receiving power exceeding the TA threshold is calculated. When the user proportion exceeding the TA threshold is greater than the pre-defined proportion (e.g., 30%) and the downlink average receiving power of the users exceeding the TA threshold is greater than a pre-defined threshold (e.g., -75dBm), it is considered that the cell is under a cross-boundary coverage state.

The relevant parameters and pre-configured thresholds under the pilot pollution event are defined as follows: when it is obtained, by measurement, that an RSRP value exceeds a pre-defined threshold (e.g., -90dBm), it is considered that the current pilot is a strong pilot, if the number of the strong pilots is greater than or equal to a pre-defined number (e.g., 4), and the difference between a field intensity value of the strongest pilot and a field intensity value of a non-strong pilot having the maximum field intensity is smaller than or equal to a pre-defined threshold (e.g., 6dBm), then it is considered that pilot pollution appears.

Step S804: The BS performs network monitoring according to the reconfiguration trigger event configuration message.

A network actual value is measured and related statistics information is collected according to the network performance parameter to be monitored specified in the reconfiguration trigger event configuration message, and is compared with a pre-configured threshold.

A specific measurement process is described as follows: the BS sends measurement configuration to a subordinate UE, and receives a measurement report of the UE. The measurement report of the UE at an edge of the cell shows that RSRP values of 40 users in 100 user measurement values within a certain area (e.g., a circle with a centre of (X,Y) and a radius of 50m) are smaller than -105dBm, and the number of users having RSRP values lower than -119dBm is 5, so the proportion of users falling within a weak coverage area threshold is 40%, and a weak coverage area trigger event is satisfied.

Step S806: The BS sends a reconfiguration request message to the SC.

The reconfiguration request message sent to the SC by the BS may include: a trigger reason: a weak coverage area; a user proportion within a range -105dBm>X>-119dBm being 40%, and a weak coverage area being: a circle with a centre of (X,Y) and a radius of 50m.

The SC optionally returns a configuration response message, and confirms, to the BS, that the reconfiguration request message has been correctly received.

Step S808: The SC receives the reconfiguration request, and makes a reconfiguration decision.

The SC runs a reconfiguration algorithm, calculates, for example, an increased transmitting power value allowed by the BS on the basis of main user protection and co-existence between secondary user devices, and determines that the BS may further improve the transmitting power to eliminate the weak coverage area, wherein the calculation result is that the transmitting power should increase from 30dBm to 40dBm.

Note: 1. in the existence of a plurality of SCs, in order to prevent mutual interference between BSs under different SCs, when the SCs calculate increased transmitting power values allowed by the BSs, it is also advisable to further consider interference of subordinate BSs of adjacent SCs.
2. Similar to an RSRP, an RS-CINR and a PDCCH SINR may also serve as parameters for evaluating a cell coverage situation.
3. The reconfiguration trigger event configuration message and the reconfiguration request message may not appear in pairs. That is, after the SC completes configuration of the reconfiguration trigger event for the communication station, subsequent repeated performance monitoring and triggering report of the communication station may be based on the previous reconfiguration trigger event configuration message.

### Embodiment 2

A BS runs at an idle spectrum f1. Under a scenario where reconfiguration is triggered due to the fact that an existing spectrum resource cannot satisfy a network demand, as shown in Fig. 8, the trigger event configuration flow is specifically described below.

Step S802: An SC sends a reconfiguration trigger event configuration message to a BS of a secondary user device.

In the exemplary embodiment, the reconfiguration trigger event configuration message may include the following information: a reconfiguration trigger event, a network performance parameter to be monitored and corresponding to the reconfiguration trigger event, a pre-configured threshold of each network performance parameter, a monitoring period, and a priority of the reconfiguration trigger event.

In the exemplary embodiment, the priority of the reconfiguration trigger event is used for deciding which reconfiguration trigger event is preferentially reported when a plurality of reconfiguration trigger events is satisfied at the same time. That is, a reconfiguration trigger event having high priority is reported preferentially, and the SC will preferentially consider meeting the demand of this reconfiguration trigger event via reconfiguration. In Table 2, the priority of a PRB utilization rate higher than a pre-configured threshold is 2, the priority of a call congestion rate is 1, and the priority of the call congestion rate higher than a pre-configured threshold is even higher, as shown in Table 2, specifically.

**Table 2**

| Reconfiguration trigger event | Network performance parameter to be monitored | Pre-configured threshold | Priority | Monitoring period |
|---|---|---|---|---|
| PRB utilization rate being higher than pre-configured threshold | PRB utilization rate | 90% | 2 | 10s |
| Call congestion rate being higher than pre-configured threshold | Call congestion rate | 5% | 1 | |

Step S804: The BS performs network monitoring according to the reconfiguration trigger event configuration message.

Statistical actual network values of a PRB utilization rate and a call congestion rate are collected according to the network performance parameter to be monitored specified in the reconfiguration trigger event configuration message, and are compared with pre-configured thresholds.

A specific measurement process is described as follows: a network management side of the BS collects statistics of a network resource utilization state (PRB utilization rate) and a probability of UE call congestion. The obtained PRB utilization rate is 95%, and the reconfiguration trigger event that the PRB utilization rate is higher than the pre-configured threshold is satisfied. Moreover, the call congestion rate is 10%, and the reconfiguration trigger event that the call congestion rate is higher than the pre-configured threshold is also satisfied.

Step S806: The BS sends a reconfiguration request message to the SC.

According to the definition of the priority, the BS selects to report that the call congestion rate is higher than the pre-configured threshold in the reconfiguration request, and the BS sends the reconfiguration request message to the SC, wherein the reconfiguration request message may include: a trigger reason: the call congestion rate is higher than the pre-configured threshold, and reaches 10%.

Note: the BS may also select to report all trigger events satisfied by the network, namely the trigger reason: the call congestion rate is higher than the pre-configured threshold, and reaches 10%; and the PRB utilization rate is higher than the pre-configured threshold, and reaches 95%.

Step S808: The SC receives the reconfiguration request, and makes a reconfiguration decision.

The SC runs a reconfiguration algorithm, adds idle spectrum resource configuration to the BS, and determines to configure an idle spectrum resource f2 for the BS by acquiring an idle spectrum resource at a location of the BS and considering co-existence with other secondary user devices, and the transmitting power is 30dBm.

Note: similar to the PRB utilization rate and the call congestion rate, a network performance parameter capable of reflecting that network resources cannot meet demands and are overloaded may further include: a PDCCH utilization rate, a hardware processor (DSP, or FPGA, or CPU or MPU) occupation rate, an E-RAB establishment blocking rate, the number of potential RRC connections, a potential throughput demand, a speech traffic, a service volume, and the number of users. When the above-mentioned parameters meet a trigger event requirement configured by the configuration management node, the reconfiguration request may be triggered likewise. In the exemplary embodiment, the number of potential RRC connections and the potential throughput demand reflect a network load state condition of the network at a next moment, and the information may be obtained based on a change rule of the number of RRC connections of the network with time or a change rule of a throughput demand with time. When this method is adopted, the number of RRC connections or the throughput demand at a historical moment may serve as an estimated value for the number of potential RRC connections or the potential throughput demand. The number of potential RRC connections and the potential throughput demand may also be obtained according to a current network user state, for example, there are more UEs staying under a certain cell of the BS, although services has not be initiated to trigger establishment of an RRC connection at this time, establishment of a great number of RRC connections may be potentially needed, and meanwhile, it is shown that the potential throughput demand is larger. When this method is adopted, the current number of network users may be representative of the number of potential RRC connections or the potential throughput demand value.

The priority is also applicable to configuration of other reconfiguration trigger events, an idea being the same as that in the present example embodiment.

### Embodiment 3

A BS runs at an idle spectrum f1. Under a scenario where reconfiguration is triggered due to the fact that an interference value on a spectrum is higher than a pre-configured threshold, as shown in Fig. 8, the trigger event configuration flow is specifically described below.

Step S802: An SC sends a reconfiguration trigger event configuration message to a BS of a secondary user device.

In the exemplary embodiment, the reconfiguration trigger event configuration message may include the following information: a reconfiguration trigger event, a network performance parameter to be monitored and corresponding to the reconfiguration trigger event, a pre-configured threshold of each network performance parameter, and a monitoring period, as shown in Table 3, specifically.

**Table 3**

| Reconfiguration trigger event | Network performance parameter to be monitored | Pre-configured threshold | Monitoring period |
|---|---|---|---|
| Interference value on spectrum being higher than pre-configured threshold | RSSI | | 1s |
| | RSRP | | |
| | Interference value (RSSI-N*RSRP) on spectrum, where N is a measurement bandwidth conversion coefficient between RSSI and RSRP | Network interference allowance threshold (e.g., -104dBm) | |

Step S804: The BS performs network monitoring according to the reconfiguration trigger event configuration message.

An RSSI and an RSRP are measured according to the network performance parameters to be monitored specified in the reconfiguration trigger event configuration message, and an interference value on a spectrum is calculated and compared with a pre-configured threshold.

A specific measurement process is described as follows: the BS measures the RSSI and RSRP values, which are measured on the same bandwidth. Therefore, N is 1, it is measured and calculated that: RSSI-RSRP=-102dBm>-104dBm. The reconfiguration trigger event is satisfied.

Step S806: The BS sends a reconfiguration request message to the SC.

The reconfiguration request message sent to the SC by the BS may include: a trigger reason: the interference value on the spectrum is higher than the pre-configured threshold; and under a current interference level, the needed transmitting power is 40dBm (current power is 30dBm) in order to implement normal communication with subordinate users.

Step S808: The SC receives the reconfiguration request, and makes a reconfiguration decision.

The SC runs a reconfiguration algorithm. The SC firstly inspects whether the transmitting power corresponding to a currently working idle spectrum of the BS is allowed to be increased to satisfy normal communication under a current channel condition. The SC accesses a GLDB to query idle spectrum information at a location of the current BS, three sections of idle spectrum resources f1, f2 and f3 exist, and corresponding maximum allowed transmitting powers are: 40dBm, 30dBm and 30dBm. From the perspective of main user protection, the BS is allowed to increase the transmitting power to 40dBm. The SC further considers co-existence between secondary systems. The SC may judge, by calculation, whether other secondary user devices will be interfered when the BS transmits with 40dBm according to a location relation between each secondary user device and the BS, spectrum isolation and a propagation model. The conclusion obtained through the judgment and calculation is that interference will not be caused. Therefore, the SC determines that it is proper to solve the problem of current over-high interference by means of a method of reconfiguring the transmitting power of the BS.

Note: if the transmitting power increasing demand of the BS cannot be met under the requirement of main user protection, the BS cannot continue using the idle spectrum f1, and the SC may further consider reconfiguring the idle spectrum f2 or f3 for the BS to implement normal communication of the BS. A specific process is similar to Step S808 in Embodiment 2, which will not be elaborated herein.

In addition, over-high interference on a working spectrum of the BS will cause decrease of the quality of network communication of the BS. Therefore, decrease of the network communication performance may indirectly reflect over-high interference on the working spectrum. For example, an SINR may be monitored to determine whether the quality of current service meets requirements. When the SINR is lower than the pre-configured threshold, it may be determined that interference on the spectrum is over-high, therefore, monitoring the SINR can serve as a mode of discovering over-high interference to further trigger reconfiguration. Similar parameters further include: a transmission rate, a throughput, a delay (a delay of conversion of a terminal from an Idle state to an Active state, or an Attach delay, or a user-plane delay, or a service interruption delay under inter-system handover), an RRC connection establishment success rate, an E-RAB establishment success rate, an RRC connection reestablishment success rate, a radio establishment success rate, an E-RAB abnormal call drop rate, an RRC abnormal call drop rate, an intra-system handover success rate, an inter-system handover success rate, a transmission rate, and a throughput. When one or more of the above-mentioned parameters satisfy the reconfiguration trigger event configured by the configuration management node, the reconfiguration request may be triggered likewise. The flow is the same as that in the present example embodiment, which will not be elaborated herein.

### Embodiment 4

Fig. 9 is a diagram showing the flow of trigger event configuration and decision according to Embodiment 4 of the present disclosure. In the presence of applying for idle spectrum resources by a plurality of secondary user devices, a flow of coordinatively allocating, by the SC, spectrum resources according to trigger events is as shown in Fig. 9. In this embodiment, two secondary user devices namely BS1 and BS2 are managed by the SC. Specific descriptions are made below.

Step S902: An SC sends reconfiguration trigger event configuration messages to secondary user devices BS1 and BS2.

In the exemplary embodiment, each reconfiguration trigger event configuration message may include the following information: a reconfiguration trigger event, a network performance parameter to be monitored and corresponding to the reconfiguration trigger event, a pre-configured threshold of each network performance parameter, and a monitoring period, as shown in Table 4, specifically.

**Table 4**

| Reconfiguration trigger event | Network performance parameter to be monitored | Pre-configured threshold | Monitoring period |
|---|---|---|---|
| PRB utilization rate being higher than pre-configured threshold | PRB utilization rate | 90% | 10s |
| Call congestion rate being higher than pre-configured threshold | Call congestion rate | 5% | |

Step S904: BS1 and BS2 perform network monitoring according to the reconfiguration trigger event configuration messages.

Statistical information of actual network values of a PRB utilization rate and a call congestion rate are collected according to the network performance parameters to be monitored specified in the reconfiguration trigger event configuration messages, and are compared with pre-configured thresholds.

A specific measurement process is described as follows. A network management side of the BS collects statistics on a network resource utilization state (PRB utilization rate) and a probability of UE call congestion. The obtained PRB utilization rates of BS1 and BS2 are 95% and 100% respectively, and the reconfiguration trigger event that the PRB utilization rate is higher than the pre-configured threshold is satisfied.

Step S906: BS1 and BS2 send reconfiguration request messages to the SC respectively.

The reconfiguration request messages sent by BS1 and BS2 respectively may in combination include the following information: a trigger reason: the PRB utilization rate is higher than the pre-configured threshold, BS1: 95%; BS2: 100%.

Step S908: The SC receives the reconfiguration request, and makes a reconfiguration decision.

The SC runs a reconfiguration algorithm. The SC pre-configures idle spectrum resources for BS1 and BS2 due to shortage of spectrum resources of BS1 and BS2. The SC accesses a GLDB to query idle spectrum information at a location of BS1 and BS2. The result is as shown in Table 5.

**Table 5**

| Device | Location | Frequency MHz | Bandwidth MHz | Maximum allowed transmitting power |
|---|---|---|---|---|
| BS1 | L1 | f1=530 | 8 | 40dBm |
| BS2 | L2 | f1=530 | 8 | 40dBm |

From the above-mentioned table, it may be seen that only the idle spectrum f1 can be configured to BS1 and BS2. It can be ensured that the two base stations do not interfere with a main user under the transmitting power of 40dBm, but intra-frequency interference may exist between the two base stations. When the SC makes a decision on inter-BS resource allocation, in consideration of the trigger reason reported by the BS indicating that the physical resource utilization rate of BS2 is higher, which shows that resources are more urgently demanded at BS2, a spectrum configuration demand of BS2 is preferentially met, and the idle spectrum is allocated to BS2.

The SC sends an idle spectrum allocation decision result, namely a result showing that an idle spectrum f1=530MHz, a bandwidth is 8MHz and a maximum allowed transmitting power is 40dBm, to BS2. BS2 can select or determine a final running parameter, for example, BS2 may determine that the transmitting power is 30dBm according to its own demands. A configuration result is fed back to the SC.

The SC further makes a resource allocation decision for BS1 according to the configuration result of BS2. In order to ensure that transmission of BS1 on f1 does not interfere with BS2, it is advisable to limit the transmitting power to 20dBm. Therefore, an idle spectrum configuration result of BS1 is that an idle spectrum f1=530MHz, a bandwidth is 8MHz and a maximum allowed transmitting power is 20dBm. The result is sent to BS1.

Note: in the present example embodiment, BS1 and BS2 send reconfiguration requests to the SC at the same time or within a period of pre-defined time (e.g., 10s). The SC makes a unified resource configuration decision for BS1 and BS2, and the sequence of the reconfiguration request messages received by the SC within the period of pre-defined time is not distinguished. Certainly, the SC may also independently make a resource allocation decision on each request, that is, the SC will make a resource allocation decision immediately after receiving the reconfiguration requests, and if such a processing mode is adopted, the SC will preferentially meet a resource configuration demand of a communication station which applies earlier.

The solutions in the above-mentioned Embodiments 1 to 4 are also applicable to a reconfiguration trigger event configuration and decision flow under an LSA technology.

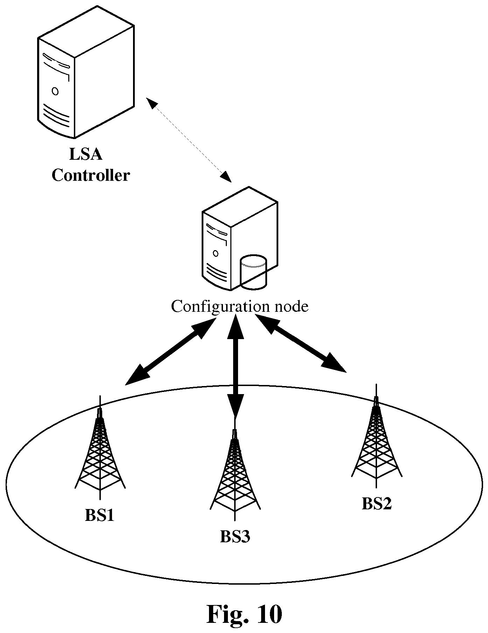

The LSA technology provides a method for sharing identical spectrum resources among an LSA master system and LSA secondary systems under a supervisory framework. The identical spectrum resources are called as LSA spectrum resources, that is, spectrum resources shared by a licensed system and an LSA system. The licensed system refers to an original licensed user of the LSA spectrum resources. The LSA system refers to a user which is licensed by a supervisory mechanism and may share the LSA spectrum resources with the licensed system. Fig. 10 is a schematic diagram of the architecture of an LSA network according to an example embodiment of the present disclosure. As shown in Fig. 10, the network architecture of LSA is introduced as follows.

The LSA controller is responsible for protecting the licensed system, and providing a master system spectrum using condition for a configuration management node, thereby avoiding the licensed system from being interfered by secondary systems. Specifically, spectrum using condition information of the licensed system within a certain area range, as well as a protection criterion of the licensed user on this area is provided to the configuration management node.

The configuration management node is responsible for configuring licensed shared resources for each licensed access system, namely determining that a subordinate communication station of the LSA system can perform LSA spectrum configuration (in the present example embodiment, LSA spectra and idle spectra of the master system are called as configurable spectra) according to the spectrum using information of the licensed system, provided by the LSA controller, on the relevant area, and determining transmitting parameter limits of the relevant communication station according to a protection criterion of the licensed system.

The BS is a communication station, and may be a base station or an AP under a cellular network system such as LTE, a 3G system and a 2G system, such as relay, pico, and femto, or an AP under an IEEE802 system such as WLAN, WRAN and Wimax.

### Embodiment 5

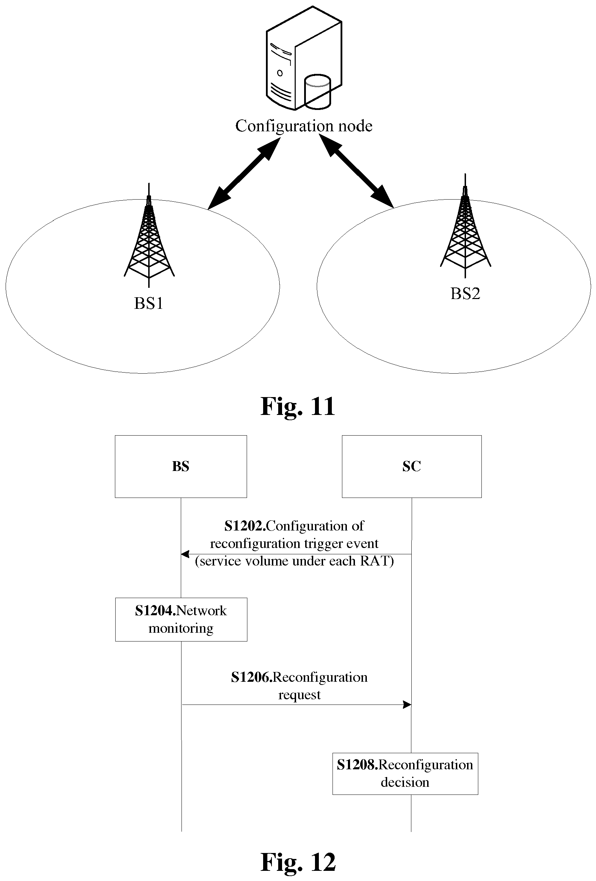

Fig. 11 is a schematic diagram of a system architecture in which a communication station runs under a multi-system shared spectrum mode according to Embodiment 5 of the present disclosure. The system architecture in which the communication station runs under the multi-system shared spectrum mode is shown in Fig. 11. The example embodiment will specifically describe specific embodiments as for the working mode. Function entities in the architecture are specifically introduced as follows.

A configuration management node is described by taking a multi-RAT coordinator as an example. The specific functions of the multi-RAT coordinator include cluster division, inter-cluster frequency planning, and co-existence management of all communication stations between different clusters.

A BS is a communication station, and may be a base station or an AP under a cellular network system such as LTE, a 3G system and a 2G system, such as relay, pico, and femto, or an AP under an IEEE802 system such as WLAN, WRAN and Wimax.

The present embodiment describes an example in which the reconfiguration is triggered according to mismatching between each RAT spectrum resource quantity proportion and a service volume proportion under each RAT within an identical area range. Fig. 12 is a diagram showing the flow of trigger event configuration and decision according to Embodiment 5 of the present disclosure. The flow is shown in Fig. 12. In the exemplary embodiment, a BS is a multi-mode base station and supports GSM and LTE networks simultaneously, i.e., the BS can serve GSM users and LTE users simultaneously. A current state of resource allocation is: GSM network 10MHz, and LTE network 10MHz. Specific descriptions are made below.

Step S1202: An SC sends a reconfiguration trigger event configuration message to a BS of a secondary user device.

In the exemplary embodiment, the reconfiguration trigger event configuration message may include the following information: a reconfiguration trigger event, a network performance parameter to be monitored and corresponding to the reconfiguration trigger event, a pre-configured threshold of each network performance parameter, and a monitoring period, as shown in Table 6, specifically.

**Table 6**

| Reconfiguration trigger event | Network performance parameter to be monitored | Pre-configured threshold | Monitoring period |
|---|---|---|---|
| Mismatching between inter-RAT spectrum resource proportion and network load proportion | GSM service volume | | 10s |
| | LTE service volume | | |
| | Service volume proportion V (GSM:LTE) | V<1/2, or V>2 | |

Step S1204: The BS performs network monitoring according to the reconfiguration trigger event configuration message.

Service volumes of GSM and LTE networks are calculated according to the network performance parameters to be monitored specified in the reconfiguration trigger event configuration message. Here, the service volume reflects a demand quantity of a user on spectrum resources, and may be represented by a product of multiplying the number of users under each RAT and a corresponding weight value. In the present embodiment, the weight value is preset as: a proportion of a spectrum demand of a GSM user to a spectrum demand of an LTE user is 1/5. Therefore, the corresponding weight value for GSM is 1, and the corresponding weight value for LTE is 5. There are 100 users under the GSM network and there are 60 users under the LTE network according to a statistic result, therefore, a service volume proportion V=100/(60^{∗}5)=1/3. By comparing this value with a pre-configured threshold, it can be concluded that V<1/2, i.e., the reconfiguration trigger event is satisfied, and the LTE service volume is relatively large.

Step S1206: The BS sends a reconfiguration request message to the SC.

The reconfiguration request message sent to the SC by the BS may include: a trigger reason: mismatching between an inter-RAT spectrum resource proportion and a network load proportion; and a current inter-RAT service volume proportion 1:3.

Step S1208: The SC receives the reconfiguration request, and makes a reconfiguration decision.

The SC adjusts inter-RAT resource allocation to match a load state. It is determined that the total spectrum resource of the BS is an invariant 20MHz, the spectrum resources of the GSM network are adjusted as 5MHz, and the spectrum resources of the LTE network are adjusted as 15MHz.

Note: the flows in Embodiments 1 to 4 are applicable to a scenario where the communication station runs under a multi-system spectrum sharing mode (e.g., IMT GSM band sharing). The difference lies in that, when the communication station runs under a mode of opportunistically using an idle spectrum of a master system, since a spectrum resource used by the communication station is the idle spectrum of the master system, the using premise is that protection requirements of the master system are met, and it is advisable to consider transmitting parameter limits on the idle spectrum when the configuration management node makes a decision to ensure no interference is caused to users of the master system. Under the multi-system spectrum sharing mode, a spectrum licensed by an operator is shared between different RATs, and the master system does not exist. Therefore, it is unnecessary to consider user protection of the master system when the configuration management node makes a decision, and it is only advisable to consider co-existence with other communication stations within a configurable spectrum range. Therefore, the common point between the two dynamic spectrum sharing modes is that: it is both advisable to consider co-existence between communication stations.

### Embodiment 6

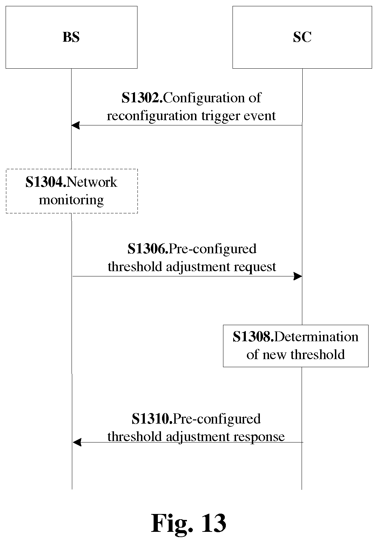

Fig. 13 is a diagram showing the flow of pre-configured threshold adjustment according to Embodiment 6 of the present disclosure. As shown in Fig. 13, the present example embodiment is described by taking a reconfiguration trigger event that interference is higher than a pre-configured threshold as an example, and specific descriptions are made below.

Step S1302: An SC sends a reconfiguration trigger event configuration message to a BS of a secondary user device.

In the exemplary embodiment, the reconfiguration trigger event configuration message may include the following information: a reconfiguration trigger event, a network performance parameter to be monitored and corresponding to the reconfiguration trigger event, a pre-configured threshold of each network performance parameter, and a monitoring period, as shown in Table 7, specifically.

**Table 7**

| Reconfiguration trigger event | Network performance parameter to be monitored | Pre-configured threshold | Monitoring period |
|---|---|---|---|
| Interference value on spectrum being higher than pre-configured threshold | RSSI | | 1s |
| | RSRP | | |
| | Interference value (RSSI-N*RSRP) on spectrum, where N is a measurement bandwidth conversion coefficient between RSSI and RSRP | -100dBm | |

Step S1304: The BS performs network monitoring according to the reconfiguration trigger event configuration message.

An RSSI and an RSRP are measured according to the network performance parameters to be monitored specified in the reconfiguration trigger event configuration message, and an interference value on a spectrum is calculated and compared with a pre-configured threshold.

A specific measurement process is described as follows: the BS measures the RSSI and RSRP values. The RSSI and RSRP are measured on the same bandwidth, therefore, N is 1. It is measured and calculated that: RSSI-RSRP=-104dBm<-100dBm. The reconfiguration trigger event is not satisfied, but the subordinate network performance of the BS cannot meet a QoS requirement.

Step S1306: The BS sends a pre-configured threshold adjustment request message to the SC.

The pre-configured threshold adjustment request message sent to the SC by the BS may include: a threshold adjustment reason: a threshold is set to be over-low, and when an interference value does not meet a threshold requirement, the spectrum cannot meet the QoS requirement of the BS already; a threshold adjustment suggestion: decrease of a pre-configured interference threshold; and a threshold adjustment target: modification of an interference value threshold on the spectrum as -105dBm.

Step S1308: The SC receives the pre-configured threshold adjustment request message, and determines a new threshold.

According to the threshold adjustment reason, the SC judges that decrease of the pre-configured interference value threshold to -105dBm is rational, and determines to set the new threshold as -105dBm.

Step S1310: The SC sends a pre-configured threshold adjustment response message to the BS, and configures the BS with a new pre-configured threshold.

Note: Step S1304 is an optional step. That is, after the BS receives a reconfiguration trigger event configuration message of the SC, the BS may judge whether the pre-configured threshold meets a network requirement on the basis of network planning experiences without network monitoring. If it is discovered, by judgement, that the corresponding monitoring parameter value cannot meet a pre-configured threshold requirement when the network performance cannot meet the QoS requirement, that is, a subordinate terminal of the network cannot be normally served before the network state satisfies the reconfiguration trigger event, a pre-configured threshold adjustment request may be initiated.

The pre-configured threshold adjustment response message in Step S1306 may also be a reconfiguration trigger event update message. That is, the configuration management node initiates update for a reconfiguration trigger event according to the pre-configured threshold adjustment request of the communication station.

By means of the process of negotiating, by the BS and the SC, over adjustment of the pre-configured threshold, the SC may save a new pre-configured threshold of the BS, so that reference can be made during configuration of the reconfiguration trigger event for the BS.

### Embodiment 7

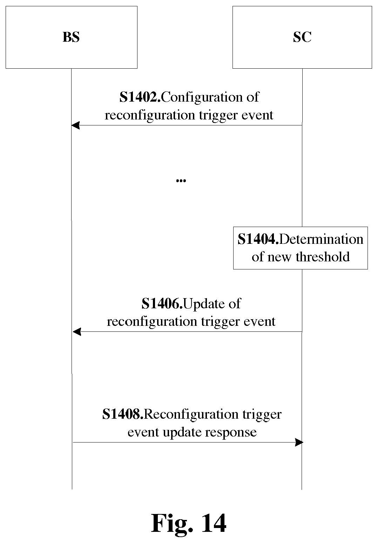

Fig. 14 is a diagram showing the flow of configuration update of reconfiguration trigger event according to Embodiment 7 of the present disclosure. As shown in Fig. 14, the present example embodiment is described by taking a reconfiguration trigger event that an existing spectrum resource cannot meet a network demand as an example, and specific descriptions are made below.

Step S1402: An SC sends a reconfiguration trigger event configuration message to a BS of a secondary user device.

In the exemplary embodiment, the reconfiguration trigger event configuration message may include the following information: a reconfiguration trigger event, a network performance parameter to be monitored and corresponding to the reconfiguration trigger event, a pre-configured threshold of each network performance parameter, and a monitoring period, as shown in Table 8, specifically.

**Table 8**

| Reconfiguration trigger event | Network performance parameter to be monitored | Pre-configured threshold | Monitoring period |
|---|---|---|---|
| PRB utilization rate being higher than pre-configured threshold | PRB utilization rate | 90% | 10s |
| Call congestion rate being higher than pre-configured threshold | Call congestion rate | 5% | |

Step S1404: The SC decides to adjust a pre-configured threshold according to a configurable resource situation after a period of time, determines a new pre-configured threshold, and generates a reconfiguration trigger event update message.

As the quantity of current configurable spectrum resources is increased, the quality of network service may be better improved. Therefore, the SC determines to reduce the pre-configured threshold to 80% and 3% respectively. As shown in Table 9, that is, compared with the previous setting of the pre-configured threshold, a communication station more easily obtains configurable spectrum resources after the update.

**Table 9**

| Reconfiguration trigger event | Network performance parameter to be monitored | Pre-configured threshold | Monitoring period |
|---|---|---|---|
| PRB utilization rate being higher than pre-configured threshold | PRB utilization rate | 80% | 10s |
| Call congestion rate being higher than pre-configured threshold | Call congestion rate | 3% | |

Step S1406: The SC sends the reconfiguration trigger event update message to the BS, so as to notify the BS of the update of the pre-configured threshold corresponding to the network performance parameter to be monitored.

The message may include: relevant network performance parameters to be monitored: a physical resource utilization rate and a call congestion rate; and the pre-configured threshold is modified into 80% and 3%.

Step S1408: The BS saves the new pre-configured threshold, and returns a reconfiguration trigger event update response message to the SC.

The updated reconfiguration trigger event will serve as a trigger standard during subsequent network performance monitoring of the BS.

In a further embodiment, software is also provided. The software is configured to execute the technical solutions described in the above-mentioned embodiments and the example embodiments.

In a further embodiment, a storage medium is also provided. The storage medium stores the above-mentioned software, and the storage medium includes, but is not limited to, an optical disk, a floppy disk, a hard disk, an erasable memory, and the like.

Obviously, those skilled in the art should understand that all modules or all steps in the present disclosure may be implemented by using a general calculation apparatus, may be centralized on a single calculation apparatus or may be distributed on a network composed of a plurality of calculation apparatuses. Optionally, they may be implemented by using executable program codes of the calculation apparatuses. Thus, they may be stored in a storage apparatus and executed by the calculation apparatuses, the shown or described steps may be executed in a sequence different from the sequence under certain conditions, or they are manufactured into each integrated circuit module respectively, or a plurality of modules or steps therein is manufactured into a single integrated circuit module. Thus, the present disclosure is not limited to combination of any specific hardware and software.

### Industrial Applicability

As above, the reconfiguration request method and apparatus, and the reconfiguration method and apparatus provided by the embodiments of the present disclosure have the following beneficial effects. The problems caused by non-standard reconfiguration requests in the related art are solved, so that the reconfiguration requests are more standardized, thereby avoiding useless reconfiguration requests, enhancing the resources configuration rationality, reducing the extra signalling costs caused by inappropriate resources configuration, and lowering processing delays.

## Claims

1. A reconfiguration request method performed by a communication station, wherein the communication station is a base station or an access point, the method comprising the steps of:
receiving (S102) a configuration message sent by a configuration management node managing the communication station; and
monitoring (S104) at least one network performance parameter according to the configuration message;
wherein the configuration message is configured to indicate a trigger condition for initiating a reconfiguration request, wherein the reconfiguration request is used for requesting the configuration management node to re-configure at least one network configuration parameter, and
the method further comprising:
initiating (S106) the reconfiguration request when the at least one network performance parameter satisfies the trigger condition.

2. The method as claimed in claim 1, wherein receiving (S102) the configuration message comprises:
receiving via a measurement configuration message, the configuration message; or
receiving via a dedicated message, the configuration message.

3. The method as claimed in claim 1 or 2, wherein the configuration message comprises at least one of the following information:
at least one reconfiguration trigger event, at least one network performance parameter to be monitored and corresponding to the at least one reconfiguration trigger event, a pre-configured threshold of the at least one network performance parameter, a monitoring period, and a priority of the at least one reconfiguration trigger event.

4. The method as claimed in claim 3, wherein
the at least one reconfiguration trigger event comprises at least one of followings:
a coverage hole; a weak coverage area; cross-boundary coverage; pilot pollution; a radio resource utilization rate or a hardware resource utilization rate being higher than a pre-configured threshold; a network congestion rate being higher than a pre-configured threshold; a network load being higher than a pre-configured threshold; the number of potential Radio Resource Control, RRC, connections or a potential throughput demand being higher than a pre-configured threshold; an interference value being higher than a pre-configured threshold; a transmission rate being lower than a pre-configured threshold; a throughput being lower than a pre-configured threshold; a network delay being higher than a pre-configured threshold; one of an RRC connection establishment success rate, an Evolved Radio Access Bearer, E-RAB, establishment success rate, an RRC connection reestablishment success rate or a radio establishment success rate being lower than a pre-configured threshold; an abnormal call drop rate being higher than a pre-configured threshold; a handover success rate being lower than a pre-configured threshold; and mismatching between a resource allocation proportion under each Radio Access Technology, RAT, and a load proportion under each RAT, or mismatching between the resource allocation proportion under each RAT and a load proportion under each service type in a practical network;
or,
the at least one network performance parameter to be monitored is at least one parameter capable of reflecting a network operating state, and the at least one network performance parameter comprises at least one of the following parameters:
a Reference Signal Received Power, RSRP, a Reference Signal Received Quality, RSRQ, a Received Signal Strength Indicator, RSSI, a coverage rate, a Reference Signal Carrier Interference-to-Noise Ratio, RS-CINR, a Physical Downlink Control Channel Signal Interference-to-Noise Ratio, PDCCH SINR, a Time Advance, TA, a Physical Resource Block, PRB, utilization rate, a PDCCH utilization rate, a hardware processor occupation rate, a call congestion rate, an E-RAB establishment blocking rate, the number of potential RRC connections, a potential throughput demand, a speech traffic, a service volume, the number of users, an interference value, an RRC connection establishment success rate, an E-RAB establishment success rate, an RRC connection reestablishment success rate, a radio establishment success rate, an E-RAB abnormal call drop rate, an RRC abnormal call drop rate, an intra-system handover success rate, an inter-system handover success rate, a transmission rate, a throughput, a delay of conversion of a User Equipment from an Idle state to an Active state, an Attach delay, a user-plane delay, a service interruption delay under inter-system handover, a service volume of each service type, and a service volume of each RAT.

5. The method as claimed in claim 3 or 4, wherein before the communication station monitors (S104) the at least one network performance parameter according to the configuration message, the method further comprises:
sending an adjustment request message to the configuration management node managing the communication station, wherein the adjustment request message is used for notifying the configuration management node of a pre-configured threshold of the at least one network performance parameter determined according to a network state of the communication station;
wherein the adjustment request message comprises at least one of the following information:
an adjustment reason, an adjustment suggestion, and an adjustment target,
wherein the adjustment suggestion comprises: increasing or decreasing of an original pre-configured threshold; and
the adjustment target comprises: a pre-configured threshold expected by the communication station, or an expected increment or decrement amplitude relative to the original pre-configured threshold.

6. The method as claimed in any one of claims 1 to 5, wherein initiating (S106) the reconfiguration request when the at least one network performance parameter satisfies the trigger condition comprises:
acquiring an actual value of the at least one network performance parameter corresponding to the trigger condition by means of measurement or statistics;
comparing the actual value of the at least one network performance parameter with a pre-configured threshold of the at least one network performance parameter in the trigger condition; and
initiating the reconfiguration request when the trigger condition is satisfied.

7. The method as claimed in any one of claims 1 to 5, wherein the reconfiguration request is further used for indicating to the configuration management node managing the communication station of a network state of the communication station, and/or a network problem, and/or a reconfiguration target; wherein the reconfiguration target is a requirement of or limit to a configuration resource by the communication station, and comprises at least one of the following parameters: a frequency point requirement, a bandwidth requirement, a transmitting power requirement, a channel quality demand, a maximum interference allowance limit, an adjacent frequency transmitting power limit, a frequency domain isolation requirement, and a coverage demand;
wherein the reconfiguration request comprises at least one of followings:
a trigger reason, wherein the trigger reason is the trigger condition satisfied by the communication station; an actual value of the at least one network performance parameter; and a reconfiguration target;
or,
the at least one network configuration parameter comprises at least one of followings:
a transmitting power, a frequency point, a bandwidth, a coverage range, an antenna height, an antenna direction angle, an antenna pitch angle, an antenna polarization mode, an out-of-band transmitting characteristic, a duplex mode of the communication station, a Radio Access Technology, RAT, a working time period, a hardware resource, a physical cell identifier, a neighbour relation table, and a mobility parameter.

8. A reconfiguration method performed by a configuration management node, the method comprising:
sending (S302) a configuration message to a communication station managed by the configuration management node, wherein the communication station is a base station or an access point, wherein the configuration message is configured to indicate a trigger condition for initiating a reconfiguration request; and
receiving (S304) the reconfiguration request from the communication station when at least one network performance parameter monitored by the communication station according to the configuration message satisfies the trigger condition and making (S304) a reconfiguration decision according to the reconfiguration request,
wherein the reconfiguration request is further used for requesting the configuration management node to re-configure at least one network configuration parameter.

9. The method as claimed in claim 8, wherein sending (S302) the configuration message comprises:
sending the configuration message via a measurement configuration message, or,
sending the configuration message via a dedicated message.

10. The method as claimed in claim 8, wherein the configuration message comprises at least one of the following information:
at least one reconfiguration trigger event, at least one network performance parameter to be monitored and corresponding to the at least one reconfiguration trigger event, a pre-configured threshold of the at least one network performance parameter, a monitoring period, and a priority of the at least one reconfiguration trigger event.

11. The method as claimed in claim 8, wherein after the configuration management node sends (S302) the configuration message, the method further comprises:
updating the configuration message, and generating a configuration update message; and
sending the configuration update message to the communication station.

12. The method as claimed in claim 11, wherein
the configuration update message comprises at least one of the following information:
at least one updated reconfiguration trigger event, at least one network performance parameter to be monitored and corresponding to the at least one updated reconfiguration trigger event, an updated pre-configured threshold of the at least one network performance parameter, a monitoring period, and a priority of the at least one updated reconfiguration trigger event; wherein
the updated pre-configured threshold of the at least one network performance parameter comprises one of:
a pre-configured threshold obtained by changing an original pre-configured threshold by the configuration management node according to a situation of currently configurable resources or a change in management policy; or,
a pre-configured threshold determined for the communication station according to a pre-configured threshold adjustment request message sent by the communication station and received by the configuration management node.

13. The method as claimed in any one of claims 8 to 12, wherein making (S304) the reconfiguration decision according to the reconfiguration request comprises:
making a reconfiguration plan for at least one network configuration parameter according to the reconfiguration request reported by the communication station managed by the configuration management node.

14. A reconfiguration request apparatus (20), located at a communication station, wherein the communication station is a base station or an access point, the apparatus comprising:
a first receiving module (22), arranged to receive a configuration message sent by a configuration management node managing the communication station; and
a monitoring module (24), arranged to monitor at least one network performance parameter according to the configuration message;
wherein the configuration message is configured to indicate a trigger condition for initiating a reconfiguration request, wherein the reconfiguration request is used for requesting the configuration management node to re-configure at least one network configuration parameter; and
the apparatus further comprising a first sending module (26), arranged to initiate, when the at least one network performance parameter satisfies the trigger condition, the reconfiguration request to the configuration management node.

15. A reconfiguration apparatus (40), located at a configuration management node, the apparatus comprising:
a second sending module (42), arranged to send a configuration message to a communication station managed by the configuration management node, wherein the communication station is a base station or an access point, wherein the configuration message is configured to indicate a trigger condition for initiating a reconfiguration request;
a second receiving module (44), arranged to receive the reconfiguration request from the communication station when at least one network performance parameter monitored by the communication station according to the configuration message satisfies the trigger condition; and
a decision module (46), arranged to make a reconfiguration decision according to the reconfiguration request,
wherein the reconfiguration request is further used for requesting the configuration management node to re-configure at least one network configuration parameter.

## Patentansprüche

1. Verfahren für eine Neukonfigurationanforderung, das durch eine Kommunikationsstation durchgeführt wird, wobei die Kommunikationsstation eine Basisstation oder ein Zugangspunkt ist, wobei das Verfahren die Schritte umfasst:
Empfangen (S102) einer Konfigurationsnachricht, die durch einen Konfigurationsverwaltungsknoten gesendet wurde, der die Kommunikationsstation verwaltet; und
Überwachen (S104) mindestens eines Netzleistungsparameters gemäß der Konfigurationsnachricht;
wobei die Konfigurationsnachricht konfiguriert ist, um eine Auslösebedingung zum Einleiten einer Neukonfigurationsanforderung anzuzeigen, wobei die Neukonfigurationsanforderung zum Anfordern den Konfigurationsverwaltungsknoten verwendet wird, um mindestens einen Netzkonfigurationsparameter neu zu konfigurieren, und das Verfahren ferner umfasst: Einleiten (S106) der Neukonfigurationsanforderung, wenn der mindestens eine Netzleistungsparameter die Auslösebedingung erfüllt.

2. Verfahren nach Anspruch 1, wobei das Empfangen (S102) der Konfigurationsnachricht umfasst:
Empfangen der Konfigurationsnachricht über eine Messungskonfigurationsnachricht; oder Empfangen der Konfigurationsnachricht über eine zweckgebundene Nachricht.

3. Verfahren nach Anspruch 1 oder 2, wobei die Konfigurationsnachricht mindestens eine der folgenden Informationen enthält:
mindestens ein Neukonfigurationsauslöseereignis, mindestens einen zu überwachenden Netzleistungsparameter, der dem mindestens einen Neukonfigurationsauslöseereignis entspricht, einen vorkonfigurierten Schwellenwert des mindestens einen Netzleistungsparameters, einen Überwachungszeitraum und eine Priorität des mindestens einen Neukonfigurationsauslöseereignisses.

4. Verfahren nach Anspruch 3, wobei
das mindestens eine Neukonfigurationsauslöseereignis mindestens eines des Folgenden umfasst:
ein Abdeckungsloch; ein Gebiet mit schwacher Abdeckung; eine grenzüberschreitende Abdeckung; einer Pilotsignalbeeinträchtigung; einer Funkressourcennutzungsrate oder einer Hardwareressourcennutzungsrate, die höher als ein vorkonfigurierter Schwellenwert ist; einer Netzüberlastungsrate, die höher als ein vorkonfigurierter Schwellenwert ist; eine Netzlast, die höher als ein vorkonfigurierter Schwellenwert ist; die Anzahl der potenziellen Funkressourcensteuerverbindungen (RRC-Verbindungen) (RRC = Radio Resource Control) oder ein potenzieller Durchsatzbedarf, der höher als ein vorkonfigurierten Schwellenwert ist; einen Interferenzwert, der höher als ein vorkonfigurierter Schwellenwert ist; eine Übertragungsrate, die niedriger als ein vorkonfigurierter Schwellenwert ist; ein Durchsatz, der niedriger als ein vorkonfigurierter Schwellenwert ist; einer Netzverzögerung, die höher als ein vorkonfigurierter Schwellenwert ist; eines aus einer RRC-Verbindungsaufbauerfolgsrate, einer E-RAB-Aufbauerfolgsrate (E-RAB = Evolved Radio Access Bearer, einer Erfolgsrate der Wiederherstellung einer RRC-Verbindung oder einer RRC-Verbindungsaufbauerfolgsrate, die niedriger als ein vorkonfigurierter Schwellenwert ist; eine abnormale Anrufabbruchrate, die höher als ein vorkonfigurierter Schwellenwert ist; eine Übergabeerfolgsrate, die niedriger als ein vorkonfigurierter Schwellenwert ist; und eine Nichtübereinstimmung zwischen einem Ressourcenzuweisungsanteil unter jeder Funkzugangstechnologie (RAT-Technologie) (RAT = Radio Access Technology) und einem Lastanteil unter jeder RAT oder eine Nichtübereinstimmung zwischen dem Ressourcenzuweisungsanteil unter jeder RAT und einem Lastanteil unter jedem Diensttyp in einem praktischen Netz;
oder
der mindestens eine zu überwachende Netzleistungsparameter mindestens ein Parameter ist, der in der Lage ist, einen Netzbetriebszustand widerzuspiegeln, und der mindestens eine Netzleistungsparameter mindestens einen der folgenden Parameter umfasst:
eine Referenzsignalempfangsleistung (Reference Signal Received Power, RSRP), eine Referenzsignalempfangsqualität (Reference Signal Received Quality, RSRQ), einen Empfangssignalstärkeindikator (Received Signal Strength Indicator, RSSI), eine Abdeckungsrate, ein Interferenz-Rausch-Verhältnis des Referenzsignalträgers (Reference Signal Carrier Interference-to-Noise Ratio, RS-CINR), ein Interferenz-Rausch-Verhältnis des Signals des physischen Downlink-Steuerkanals (Physical Downlink Control Channel Signal Interference-to-Noise Ratio, PDCCH SINR), einen Zeitfortschritt (Time Advance, TA), eine Auslastungsrate physischer Ressourcenblöcke (PRB-Auslastungsrate) (PRB = Physical Resource Block, eine PDCCH-Auslastungsrate, eine Hardwareprozessorbelegungsrate, eine Anrufüberlastungsrate, eine E-RAB-Aufbaublockierungsrate, die Anzahl potenzieller RRC-Verbindungen, einen potenziellen Durchsatzbedarf, einen Sprachverkehr, ein Dienstvolumen, die Anzahl von Benutzern, einen Interferenzwert, eine RRC-Verbindungsaufbauerfolgsrate, eine E-RAB-Aufbauerfolgsrate, eine Erfolgsrate bei der Wiederherstellung von RRC-Verbindungen, eine Funkverbindungsaufbauerfolgsrate, eine abnormale E-RAB-Anrufabbruchrate, eine abnormale RRC-Anrufabbruchrate, eine Erfolgsrate bei systeminternen Übergaben, eine Erfolgsrate bei systemübergreifenden Übergaben, eine Übertragungsrate, einen Durchsatz, eine Verzögerung der Umwandlung eines Benutzergeräts von einem Ruhezustand in einen aktiven Zustand, eine Anhängeverzögerung, eine Verzögerung auf Benutzerebene, eine Dienstunterbrechungsverzögerung bei einer systemübergreifenden Übergabe, ein Dienstvolumen jedes Diensttyps und ein Dienstvolumen jeder RAT.

5. Verfahren nach Anspruch 3 oder 4, wobei, bevor die Kommunikationsstation den mindestens einen Netzleistungsparameter gemäß der Konfigurationsnachricht überwacht (S 104), das Verfahren ferner umfasst:
Senden einer Anpassungsanforderungsnachricht an den Konfigurationsverwaltungsknoten, der die Kommunikationsstation verwaltet, wobei die Anpassungsanforderungsnachricht verwendet wird, um den Konfigurationsverwaltungsknoten über einen vorkonfigurierten Schwellenwert des mindestens einen Netzleistungsparameters zu benachrichtigen, der gemäß einem Netzzustand der Kommunikationsstation ermittelt wurde;
wobei die Anpassungsanforderungsnachricht mindestens eine der folgenden Informationen umfasst:
einen Anpassungsgrund, einen Anpassungsvorschlag und ein Anpassungsziel,
wobei der Anpassungsvorschlag umfasst: Erhöhen oder Verringern eines ursprünglichen vorkonfigurierten Schwellenwerts; und
das Anpassungsziel umfasst: einen vorkonfigurierten Schwellenwert, der durch die Kommunikationsstation erwartet wird, oder eine erwartete Zunahme oder Abnahme der Amplitude relativ zum ursprünglich vorkonfigurierten Schwellenwert.

6. Verfahren nach einem der Ansprüche 1 bis 5, wobei, wenn der mindestens eine Netzleistungsparameter die Auslösebedingung erfüllt, das Einleiten (S106) der Neukonfigurationsanforderung umfasst:
Erfassen eines Istwerts des mindestens einen Netzleistungsparameters, der der Auslösebedingung entspricht, durch Messung oder Statistik;
Vergleichen des Istwerts des mindestens einen Netzleistungsparameters mit einem vorkonfigurierten Schwellenwert des mindestens einen Netzleistungsparameters in der Auslösebedingung; und
Einleiten der Neukonfigurationsanforderung, wenn die Auslösebedingung erfüllt ist.

7. Verfahren nach einem der Ansprüche 1 bis 5, wobei die Neukonfigurationsanforderung ferner verwendet wird, um dem Konfigurationsverwaltungsknoten, der die Kommunikationsstation verwaltet, einen Netzzustand der Kommunikationsstation und/oder ein Netzproblem und/oder ein Neukonfigurationsziel anzuzeigen; wobei das Neukonfigurationsziel eine Anforderung oder Begrenzung einer Konfigurationsressource durch die Kommunikationsstation ist und mindestens einen der folgenden Parameter umfasst: eine Frequenzpunktanforderung, eine Bandbreitenanforderung, eine Sendeleistungsanforderung, einen Kanalqualitätsbedarf, einen maximalen Interferenzzulässigkeitsgrenzwert, einen Sendeleistungsgrenzwert der benachbarten Frequenz,, eine Anforderung an die Frequenzbereichstrennung und einen Abdeckungsbedarf;
wobei die Neukonfigurationsanforderung mindestens eines des Folgenden umfasst:
einen Auslösegrund, wobei der Auslösegrund die Auslösebedingung ist, die durch die Kommunikationsstation erfüllt wird; einen Istwert des mindestens einen Netzleistungsparameters; und ein Neukonfigurationsziel;
oder
der mindestens eine Netzkonfigurationsparameter mindestens eines des Folgenden umfasst:
eine Sendeleistung, einen Frequenzpunkt, eine Bandbreite, einen Abdeckungsbereich, eine Antennenhöhe, einen Antennenrichtungswinkel, einen Antennenneigungswinkel, einen Antennenpolarisationsmodus, eine Außerband-Übertragungscharakteristik, einen Duplexmodus der Kommunikationsstation, eine Funkzugangstechnologie (RAT), eine Arbeitszeitperiode, eine Hardwareressource, eine physische Zellenkennung, eine Nachbarbeziehungstabelle und einen Mobilitätsparameter.

8. Neukonfigurationsverfahren, das durch einen Konfigurationsverwaltungsknoten durchgeführt wird, wobei das Verfahren umfasst:
Senden (S302) einer Konfigurationsnachricht an eine Kommunikationsstation, die durch den Konfigurationsverwaltungsknoten verwaltet wird, wobei die Kommunikationsstation eine Basisstation oder ein Zugangspunkt ist, wobei die Konfigurationsnachricht konfiguriert ist, um eine Auslösebedingung zum Einleiten einer Neukonfigurationsanforderung anzuzeigen; und
Empfangen (S304) der Neukonfigurationsanforderung von der Kommunikationsstation, wenn mindestens ein Netzleistungsparameter, der durch die Kommunikationsstation gemäß der Konfigurationsnachricht überwacht wird, die Auslösebedingung erfüllt und eine Neukonfigurationsentscheidung gemäß der Neukonfigurationsanforderung trifft (S304),
wobei die Neukonfigurationsanforderung ferner verwendet wird, um den Konfigurationsverwaltungsknoten aufzufordern, mindestens einen Netzkonfigurationsparameter neu zu konfigurieren.

9. Verfahren nach Anspruch 8, wobei das Senden (S302) der Konfigurationsnachricht umfasst:
Senden der Konfigurationsnachricht über eine Messungskonfigurationsnachricht oder Senden der Konfigurationsnachricht über eine zweckgebundene Nachricht.

10. Verfahren nach Anspruch 8, wobei die Konfigurationsnachricht mindestens eine der folgenden Informationen umfasst:
mindestens ein Neukonfigurationsauslöseereignis, mindestens einen zu überwachenden Netzleistungsparameter, der dem mindestens einen Neukonfigurationsauslöseereignis entspricht, einen vorkonfigurierten Schwellenwert des mindestens einen Netzleistungsparameters, einen Überwachungszeitraum und eine Priorität des mindestens einen Neukonfigurationsauslöseereignisses.

11. Verfahren nach Anspruch 8, wobei, nachdem der Konfigurationsverwaltungsknoten die Konfigurationsnachricht sendet (S302), das Verfahren ferner umfasst:
Aktualisieren der Konfigurationsnachricht und Erzeugen einer Konfigurationsaktualisierungsnachricht; und
Senden der Konfigurationsaktualisierungsnachricht an die Kommunikationsstation.

12. Verfahren nach Anspruch 11, wobei
die Konfigurationsaktualisierungsnachricht mindestens eine der folgenden Informationen umfasst:
mindestens ein aktualisiertes Neukonfigurationsauslöseereignis, mindestens einen zu überwachenden Netzleistungsparameter, der dem mindestens einen aktualisierten Neukonfigurationsauslöseereignis entspricht, einen aktualisierten vorkonfigurierten Schwellenwert des mindestens einen Netzleistungsparameters, einen Überwachungszeitraum und eine Priorität des mindestens einen aktualisierten Neukonfigurationsauslöseereignisses;
wobei
der aktualisierte vorkonfigurierte Schwellenwert des mindestens einen Netzleistungsparameters eines umfasst aus:
einem vorkonfigurierten Schwellenwert, der durch Ändern eines ursprünglichen vorkonfigurierten Schwellenwerts durch den Konfigurationsverwaltungsknoten gemäß einer Situation mit aktuell konfigurierbaren Ressourcen oder einer Änderung der Verwaltungsrichtlinie erhalten wurde; oder
einem vorkonfigurierten Schwellenwert, der für die Kommunikationsstation gemäß einer vorkonfigurierten Schwellenwert-Anpassungsanforderungsnachricht ermittelt wurde, die durch die Kommunikationsstation gesendet und durch den Konfigurationsverwaltungsknoten empfangen wurde.

13. Verfahren nach einem der Ansprüche 8 bis 12, wobei das Treffen (S304) der Neukonfigurationsentscheidung gemäß der Neukonfigurationsanforderung umfasst:
Erstellen eines Neukonfigurationsplans für mindestens einen Netzkonfigurationsparameter gemäß der Neukonfigurationsanforderung, die durch die Kommunikationsstation gemeldet wurde, die durch den Konfigurationsverwaltungsknoten verwaltet wird.

14. Neukonfigurationsanforderungsvorrichtung (20), die sich an einer Kommunikationsstation befindet, wobei die Kommunikationsstation eine Basisstation oder ein Zugangspunkt ist, wobei die Vorrichtung umfasst:
ein erstes Empfangsmodul (22), das so ausgelegt ist, dass eine Konfigurationsnachricht empfangen wird, die durch einen Konfigurationsverwaltungsknoten gesendet wurde, der die Kommunikationsstation verwaltet; und
ein Überwachungsmodul (24), das so ausgelegt ist, dass mindestens ein Netzleistungsparameter gemäß der Konfigurationsnachricht überwacht wird;
wobei die Konfigurationsnachricht konfiguriert ist, um eine Auslösebedingung zum Einleiten einer Neukonfigurationsanforderung anzuzeigen, wobei die Neukonfigurationsanforderung zum Auffordern des Konfigurationsverwaltungsknotens verwendet wird, um mindestens einen Netzkonfigurationsparameter neu zu konfigurieren; und wobei die Vorrichtung ferner ein erstes Sendemodul (26) umfasst, das so ausgelegt ist, dass die Neukonfigurationsanforderung an den Konfigurationsverwaltungsknoten eingeleitet wird, wenn der mindestens eine Netzleistungsparameter die Auslösebedingung erfüllt.

15. Neukonfigurationsvorrichtung (40), die sich an einem Konfigurationsverwaltungsknoten befindet, wobei die Vorrichtung umfasst:
ein zweites Sendemodul (42), das so ausgelegt ist, dass eine Konfigurationsnachricht an eine durch den Konfigurationsverwaltungsknoten verwaltete Kommunikationsstation gesendet wird, wobei die Kommunikationsstation eine Basisstation oder ein Zugangspunkt ist, wobei die Konfigurationsnachricht so konfiguriert ist, dass eine Auslösebedingung zum Einleiten einer Neukonfigurationsanforderung angezeigt wird;
ein zweites Empfangsmodul (44), das so ausgelegt ist, dass die Neukonfigurationsanforderung von der Kommunikationsstation empfangen wird, wenn mindestens ein durch die Kommunikationsstation gemäß der Konfigurationsnachricht überwachter Netzleistungsparameter die Auslösebedingung erfüllt; und
ein Entscheidungsmodul (46), das so ausgelegt ist, dass entsprechend der Neukonfigurationsanforderung eine Neukonfigurationsentscheidung getroffen wird,
wobei die Neukonfigurationsanforderung ferner verwendet wird, um den Konfigurationsverwaltungsknoten aufzufordern, mindestens einen Netzkonfigurationsparameter neu zu konfigurieren.

## Revendications

1. Procédé de demande de reconfiguration exécuté par une station de communication, dans lequel la station de communication est une station de base ou un point d'accès, le procédé comprenant les étapes de :
réception (S102) d'un message de configuration envoyé par un nœud de gestion de configuration gérant la station de communication ; et
surveillance (S104) d'au moins un paramètre de performance de réseau selon le message de configuration ;
dans lequel le message de configuration est configuré pour indiquer une condition de déclenchement pour initier une demande de reconfiguration, dans lequel la demande de reconfiguration est utilisée pour demander au nœud de gestion de configuration de reconfigurer au moins un paramètre de configuration de réseau et le procédé comprend en outre : l'initiation (S 106) de la demande de reconfiguration lorsque le au moins un paramètre de performance de réseau satisfait la condition de déclenchement.

2. Procédé selon la revendication 1, dans lequel la réception (S102) du message de configuration comprend :
la réception, par l'intermédiaire d'un message de configuration de mesure, du message de configuration ; ou la réception, par l'intermédiaire d'un message dédié, du message de configuration.

3. Procédé selon la revendication 1 ou 2, dans lequel le message de configuration comprend au moins l'une des informations suivantes :
au moins un événement de déclenchement de reconfiguration, au moins un paramètre de performance de réseau à surveiller et correspondant au au moins un événement de déclenchement de reconfiguration, un seuil préconfiguré du au moins un paramètre de performance de réseau, une période de surveillance et une priorité du au moins un événement de déclenchement de reconfiguration.

4. Procédé selon la revendication 3, dans lequel
le au moins un événement de déclenchement de reconfiguration comprend au moins l'un des éléments suivants :
un trou de couverture ; une zone de couverture faible ; une couverture transfrontalière ; une pollution pilote ; un taux d'utilisation de ressources radio ou un taux d'utilisation de ressources matérielles supérieur à un seuil préconfiguré ; un taux d'encombrement de réseau supérieur à un seuil préconfiguré ; une charge de réseau supérieure à un seuil préconfiguré ; le nombre de connexions de commandes de ressources radio, RRC, potentielles ou une demande de débit potentielle supérieurs à un seuil préconfiguré ; une valeur d'interférences supérieure à un seuil préconfiguré ; un débit de transmission inférieur à un seuil préconfiguré ; un débit inférieur à un seuil préconfiguré ; un retard de réseau supérieur à un seuil préconfiguré ; un élément parmi un taux de réussite d'établissement de connexion RRC, un taux de réussite d'établissement de porteuse d'accès radio évoluée, E-RAB, un taux de réussite de rétablissement de connexion RRC ou un taux de réussite d'établissement radio inférieurs à un seuil préconfiguré ; un taux d'abandon d'appel anormal supérieur à un seuil préconfiguré ; un taux de réussite de transfert inférieur à un seuil préconfiguré ; et une inadéquation entre une proportion d'affectation de ressources sous chaque technologie d'accès radio, RAT, et une proportion de charge sous chaque RAT ou une inadéquation entre la proportion d'affectation de ressources sous chaque RAT et une proportion de charge sous chaque type de service dans un réseau pratique ;
ou
le au moins un paramètre de performance de réseau à surveiller est au moins un paramètre capable de refléter un état de fonctionnement de réseau et le au moins un paramètre de performance de réseau comprend au moins l'un des paramètres suivants :
une puissance de réception de signal de référence, RSRP, une qualité de réception de signal de référence, RSRQ, un indicateur de force de signal reçu, RSSI, un taux de couverture, un rapport interférences sur bruit de porteuse de signal de référence, RS-CINR, un rapport interférences sur bruit de signal de canal de commande en liaison descendante physique, PDCCH SINR, une avance de temps, TA, un bloc de ressources physiques, PRB, un taux d'utilisation, un taux d'utilisation de PDCCH, un taux d'occupation de processeur matériel, un taux de congestion des appels, un taux de blocage d'établissement E-RAB, le nombre de connexions RRC potentielles, une demande de débit potentielle, un trafic vocal, un volume de service, le nombre d'utilisateurs, une valeur d'interférences, un taux de réussite d'établissement de connexions RRC, un taux de réussite d'établissement E-RAB, un taux de réussite de rétablissement de connexions RRC, un taux de réussite d'établissement radio, un taux d'abandon d'appel anormal E-RAB, un taux d'abandon d'appel anormal RRC, un taux de réussite de transfert intra-système, un taux de réussite de transfert inter-système, un taux de transmission, un débit, un retard de conversion d'un équipement utilisateur, d'un état inactif à un état actif, un retard d'attachement, un retard dans le plan utilisateur, un retard d'interruption de service lors d'un transfert inter-système, un volume de service de chaque type de service et un volume de service de chaque RAT.

5. Procédé selon la revendication 3 ou 4, dans lequel, avant que la station de communication ne surveille (S 104) le au moins un paramètre de performance de réseau selon le message de configuration, le procédé comprend en outre :
l'envoi d'un message de demande d'ajustement au nœud de gestion de configuration gérant la station de communication, dans lequel le message de demande d'ajustement est utilisé pour notifier au nœud de gestion de configuration un seuil préconfiguré du au moins un paramètre de performance de réseau déterminé en fonction d'un état de réseau de la station de communication ;
dans lequel le message de demande d'ajustement comprend au moins une des informations suivantes :
un motif d'ajustement, une suggestion d'ajustement et une cible d'ajustement,
dans lequel la suggestion d'ajustement comprend : l'augmentation ou la diminution d'un seuil préconfiguré d'origine ; et
la cible d'ajustement comprend : un seuil préconfiguré attendu par la station de communication ou une amplitude d'incrémentation ou de décrémentation attendue par rapport au seuil préconfiguré d'origine.

6. Procédé selon l'une quelconque des revendications 1 à 5, dans lequel l'initiation (S 106) de la demande de reconfiguration, lorsque le au moins un paramètre de performance de réseau satisfait la condition de déclenchement, comprend :
l'acquisition d'une valeur réelle du au moins un paramètre de performance de réseau correspondant à la condition de déclenchement au moyen de mesure ou de statistiques ;
la comparaison de la valeur réelle du au moins un paramètre de performance de réseau à un seuil préconfiguré du au moins un paramètre de performance de réseau dans la condition de déclenchement ; et
l'initiation de la demande de reconfiguration lorsque la condition de déclenchement est satisfaite.

7. Procédé selon l'une quelconque des revendications 1 à 5, dans lequel la demande de reconfiguration est en outre utilisée pour indiquer au nœud de gestion de configuration gérant la station de communication un état de réseau de la station de communication et/ou un problème de réseau et/ou une cible de reconfiguration ; dans lequel la cible de reconfiguration est une exigence ou une limite d'une ressource de configuration par la station de communication et comprend au moins l'un des paramètres suivants : une exigence de point de fréquence, une exigence de bande passante, une exigence de puissance de transmission, une demande de qualité de canal, une limite de tolérance d'interférences maximum, une limite de puissance de transmission de fréquence adjacente, une exigence d'isolement de domaine de fréquence et une demande de couverture ;
dans lequel la demande de reconfiguration comprend au moins l'un des éléments suivants :
un motif de déclenchement, dans lequel le motif de déclenchement est la condition de déclenchement satisfaite par la station de communication ; une valeur réelle du au moins un paramètre de performance de réseau ; et une cible de reconfiguration ;
ou
le au moins un paramètre de configuration de réseau comprend au moins l'un des éléments suivants :
une puissance de transmission, un point de fréquence, une bande passante, une plage de couverture, une hauteur d'antenne, un angle de direction d'antenne, un angle de pas d'antenne, un mode de polarisation d'antenne, une caractéristique de transmission hors bande, un mode duplex de la station de communication, une technologie d'accès radio, RAT, une période de temps de travail, une ressource matérielle, un identifiant de cellule physique, une table de relations de voisinage et un paramètre de mobilité.

8. Procédé de reconfiguration exécuté par un nœud de gestion de configuration, le procédé comprenant :
l'envoi (S302) d'un message de configuration à une station de communication gérée par le nœud de gestion de configuration, dans lequel la station de communication est une station de base ou un point d'accès, dans lequel le message de configuration est configuré pour indiquer une condition de déclenchement pour initier une demande de reconfiguration ; et
la réception (S304) de la demande de reconfiguration provenant de la station de communication lorsqu'au moins un paramètre de performance de réseau surveillé par la station de communication selon le message de configuration satisfait la condition de déclenchement et la prise (S304) d'une décision de reconfiguration selon la demande de reconfiguration,
dans lequel la demande de reconfiguration est en outre utilisée pour demander au nœud de gestion de configuration de reconfigurer au moins un paramètre de configuration de réseau.

9. Procédé selon la revendication 8, dans lequel l'envoi (S302) du message de configuration comprend :
l'envoi du message de configuration par l'intermédiaire d'un message de configuration de mesure ou l'envoi du message de configuration par l'intermédiaire d'un message dédié.

10. Procédé selon la revendication 8, dans lequel le message de configuration comprend au moins l'une des informations suivantes :
au moins un événement de déclenchement de reconfiguration, au moins un paramètre de performance de réseau à surveiller et correspondant au au moins un événement de déclenchement de reconfiguration, un seuil préconfiguré du au moins un paramètre de performance de réseau, une période de surveillance et une priorité du au moins un événement de déclenchement de reconfiguration.

11. Procédé selon la revendication 8, dans lequel, après que le nœud de gestion de configuration a envoyé (S302) le message de configuration, le procédé comprend en outre :
la mise à jour du message de configuration et la génération d'un message de mise à jour de configuration ; et
l'envoi du message de mise à jour de configuration à la station de communication.

12. Procédé selon la revendication 11, dans lequel
le message de mise à jour de configuration comprend au moins l'une des informations suivantes :
au moins un événement de déclenchement de reconfiguration mis à jour, au moins un paramètre de performance de réseau à surveiller et correspondant au au moins un événement de déclenchement de reconfiguration mis à jour, un seuil préconfiguré mis à jour du au moins un paramètre de performance de réseau, une période de surveillance et une priorité du au moins un événement de déclenchement de reconfiguration mis à jour ;
dans lequel
le seuil préconfiguré mis à jour du au moins un paramètre de performance de réseau comprend un élément parmi :
un seuil préconfiguré obtenu en modifiant un seuil préconfiguré d'origine par le nœud de gestion de configuration en fonction d'une situation de ressources actuellement configurables ou d'un changement de politique de gestion ; ou
un seuil préconfiguré déterminé pour la station de communication selon un message de demande d'ajustement de seuil préconfiguré envoyé par la station de communication et reçu par le nœud de gestion de configuration.

13. Procédé selon l'une quelconque des revendications 8 à 12, dans lequel la prise (S304) de la décision de reconfiguration selon la demande de reconfiguration comprend :
la réalisation d'un plan de reconfiguration pour au moins un paramètre de configuration de réseau selon la demande de reconfiguration rapportée par la station de communication gérée par le nœud de gestion de configuration.

14. Appareil de demande de reconfiguration (20), situé au niveau d'une station de communication, dans lequel la station de communication est une station de base ou un point d'accès, l'appareil comprenant :
un premier module de réception (22), agencé pour recevoir un message de configuration envoyé par un nœud de gestion de configuration gérant la station de communication ; et
un module de surveillance (24), agencé pour surveiller au moins un paramètre de performance de réseau en fonction du message de configuration ;
dans lequel le message de configuration est configuré pour indiquer une condition de déclenchement afin d'initier une demande de reconfiguration, dans lequel la demande de reconfiguration est utilisée pour demander au nœud de gestion de configuration de reconfigurer au moins un paramètre de configuration de réseau ; et l'appareil comprenant en outre un premier module d'envoi (26), agencé pour initier, lorsque le au moins un paramètre de performance de réseau satisfait la condition de déclenchement, la demande de reconfiguration sur le nœud de gestion de configuration.

15. Appareil de reconfiguration (40), situé au niveau d'un nœud de gestion de configuration, l'appareil comprenant :
un second module d'envoi (42), agencé pour envoyer un message de configuration à une station de communication gérée par le nœud de gestion de configuration, dans lequel la station de communication est une station de base ou un point d'accès, dans lequel le message de configuration est configuré pour indiquer une condition de déclenchement pour initier une demande de reconfiguration ;
un second module de réception (44), agencé pour recevoir la demande de reconfiguration de la station de communication lorsqu'au moins un paramètre de performance de réseau surveillé par la station de communication selon le message de configuration satisfait la condition de déclenchement ; et
un module de décision (46), agencé pour prendre une décision de reconfiguration selon la demande de reconfiguration,
dans lequel la demande de reconfiguration est en outre utilisée pour demander au nœud de gestion de configuration de reconfigurer au moins un paramètre de configuration de réseau.
